(19) Europäisches Patentamt
European Patent Office
Office européen des brevets

(11) EP 3 521 387 B1

(12) EUROPEAN PATENT SPECIFICATION

(45) Date of publication and mention of the grant of the patent:
**11.01.2023 Bulletin 2023/02**

(21) Application number: **17855468.9**

(22) Date of filing: **18.08.2017**

(51) International Patent Classification (IPC):
***C09D 17/00*** ^(2006.01) ***B41J 2/01*** ^(2006.01)
***B41M 5/00*** ^(2006.01) ***C09D 11/326*** ^(2014.01)
***C09D 11/322*** ^(2014.01) ***C09D 11/38*** ^(2014.01)
***C09D 11/107*** ^(2014.01) ***C09D 11/033*** ^(2014.01)
***C09D 11/106*** ^(2014.01) ***C09D 11/037*** ^(2014.01)

(52) Cooperative Patent Classification (CPC):
**C09D 11/326; C09D 11/033; C09D 11/037; C09D 11/106; C09D 11/107; C09D 11/322; C09D 11/38**

(86) International application number:
**PCT/JP2017/029659**

(87) International publication number:
**WO 2018/061510 (05.04.2018 Gazette 2018/14)**

(54) **WATER-BASED PIGMENT DISPERSION, AND WATER-BASED INK COMPOSITION**

WÄSSRIGE PIGMENTDISPERSION UND WÄSSRIGE TINTENZUSAMMENSETZUNG

DISPERSION DE PIGMENT À BASE D’EAU, ET COMPOSITION D’ENCRE À BASE D’EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 JP 2016194910**

(43) Date of publication of application:
**07.08.2019 Bulletin 2019/32**

(73) Proprietor: **FUJIFILM Corporation**
**Tokyo 106-8620 (JP)**

(72) Inventors:
- **KOYANAGI, Masashi**
  **Ashigarakami-gun**
  **Kanagawa 258-8577 (JP)**
- **KIKUCHI, Wataru**
  **Ashigarakami-gun**
  **Kanagawa 258-8577 (JP)**
- **NISHIMURA, Naoko**
  **Ashigarakami-gun**
  **Kanagawa 258-8577 (JP)**

(74) Representative: **Klunker IP Patentanwälte PartG mbB**
**Destouchesstraße 68**
**80796 München (DE)**

(56) References cited:
**JP-A- 2000 265 083** **JP-A- 2001 329 199**
**JP-A- 2004 035 872** **JP-A- 2005 272 790**
**JP-A- 2009 504 884** **JP-A- 2012 188 582**
**JP-A- 2012 528 229** **JP-A- 2015 193 729**
**JP-A- 2016 069 487** **US-A1- 2006 017 759**
**US-A1- 2016 222 234**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND OF THE INVENTION

1. Field of the Invention

The present invention relates to an aqueous pigment dispersion, an aqueous ink composition and the use of the aqueous ink composition.

2. Description of the Related Art

Examples of an image recording method for forming an image on a recording medium such as paper based on an image data signal include a recording method such as an electrophotographic method, a thermal transfer method, and an ink jet method.

The image recording method (ink jet recording method) by the ink jet method does not require a printing plate and directly forms an image on the recording medium by jetting ink only to an image forming portion, so that the ink can be used efficiently, and the running cost is low. With respect to the ink jet recording method, a printing device is relatively inexpensive, can be downsized, and produces less noise than a printing machine in the related art. In this manner, the ink jet recording method has various advantages as compared with other image recording methods.

A dye has been used as a coloring material in aqueous ink of an ink jet printer. However, with aqueous ink using a dye, image bleeding easily occurs, and there have been restrictions on improving light resistance and water resistance. In order to overcome these disadvantages, recently, aqueous ink using a pigment as a coloring material is used. In the aqueous ink using a pigment, it is required to stably disperse the pigment in an aqueous medium. Therefore, in a pigment dispersion to be used as aqueous ink or a raw material for aqueous ink, a dispersing agent is usually used to enhance the dispersibility and dispersion stability of the pigment.

JP2016-069487A discloses an aqueous pigment dispersion containing an aqueous medium, a pigment, and a polymer dispersant, in which the polymer dispersant at least has a constitutional unit represented by Formula (I), a constitutional unit represented by Formula (II), and a constitutional unit having an acidic group, and a content ratio of the constitutional unit represented by Formula (I) in the polymer dispersant is 20 to 60 mass%, and a content ratio of the constitutional unit represented by Formula (II) is 10 to 40 mass%.

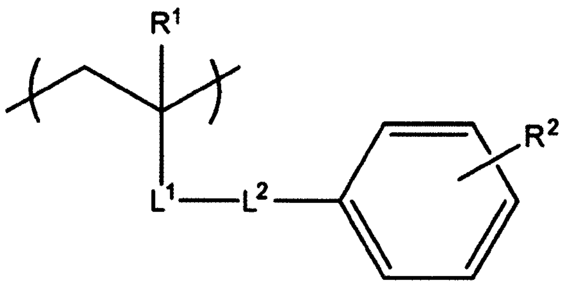

Formula (I)

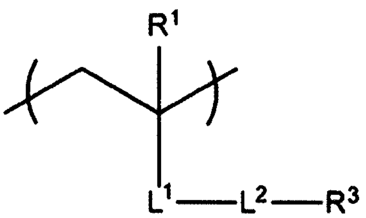

Formula (II)

JP2015-093897A discloses ink jet recording ink containing water, a water-soluble organic solvent, a pigment, and a polymer including a structural unit represented by Formula (1), a structural unit represented by Formula (2), and a structural unit represented by Formula (3) or (4).

Formula (1)

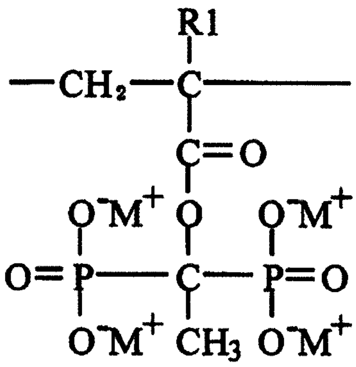

Formula (2)

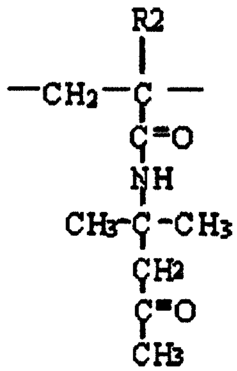

Formula (3)

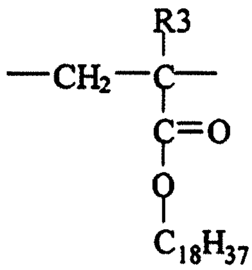

Formula (4)

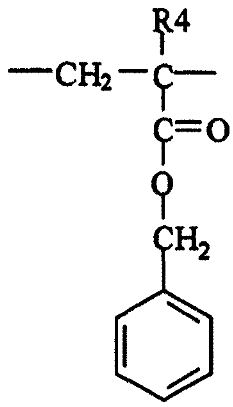

JP2015-157891A discloses ink jet recording ink containing water, a water-soluble solvent, a pigment, and a copolymer including a phosphoric acid group, in which the copolymer including a phosphoric acid group at least has a structural unit represented by Formula (1), a structural unit represented by Formula (2), a structural unit represented by Formula (3), and a structural unit represented by Formula (4).

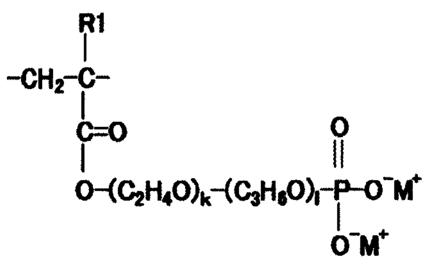

Formula (1)

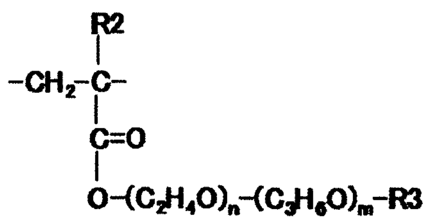

Formula (2)

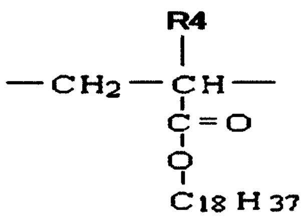

Formula (3)

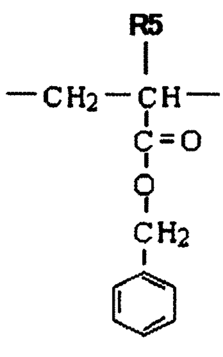

Formula (4)

JP1996-253719A (JP-H08-253719A) discloses ink composition at least including a pigment, a dispersant, and water, in which the dispersant is a polymer dispersant having a carboxyl group, and the ink composition further includes hydroxide of alkali metal and alcohol amine having one or more hydroxyl groups.

JP1998-046090A (JP-H10-046090A) discloses a water-based pigment ink containing a pigment, a polymer dispersant including a copolymer of an alkylene oxide-added (meth)acrylic acid derivative, amino alcohol, and water.

US 2006/017759 A1 teaches an inkjet recording method, which includes forming a color image with color inks while scanning a recording head multiple times on a same recording area, forming a thinned-out image, the recording head having a plurality of nozzle sections for jetting the color inks, wherein a nozzle pitch is from 10 to 50 μm. The color inks comprise C, M, Y and BK inks and at least one special color ink, the color inks contain pigments, at least one organic solvent with high boiling point and water, a dot formed by the color inks has a size of 10 to 50 μm, the recording medium has a transferred amount at 0.04 seconds of absorption time of 10 ml/$m^2$ or more, the recording medium comprises a micro-porous layer containing inorganic fine particles and a hydrophilic binder; and a 20-degree specular gloss of the recording medium is 20 to 45%.

US 2016/222234 A1 discloses an ink, which includes a pigment, a wax, a water soluble solvent including a solvent having an SP value of from 9.0 to 11.0, and water, wherein the mass ratio of the content of the wax in the ink to the content of the solvent having an SP value of from 9.0 to 11.0 is in a range of from 1.0:2.5 to 1.0:25.0.

JP 2001-329199 A relates to the problem of obtaining a water-based ink composition, which exhibits excellent water resistance, excellent abrasion resistance and excellent marker resistance, and water-based ink composition, which can be used for water-based ink products having excellent printability and which can be used for ink jet recording. This water-based ink composition comprises an aqueous medium, a self-dispersing pigment and/or polymer particles A comprising a water- insoluble polymer and a dye or pigment contained in the polymer, and polymer particles B.

SUMMARY OF THE INVENTION

As described above, the aforementioned documents of the related art disclose various pigment dispersions and ink compositions, but usage environments, and usage aspects of the aqueous pigment dispersion vary, and thus further improvement of the preservation stability of the aqueous pigment dispersion is desired.

An object to be achieved by the embodiment of the present invention is to provide an aqueous pigment dispersion having excellent preservation stability and an aqueous ink composition in which the aqueous pigment dispersion is used.

The present invention is defined in the appended claims..

According to the embodiment of the present invention, it is possible to provide an aqueous pigment dispersion having excellent preservation stability and an aqueous ink composition in which the aqueous pigment dispersion is used.

DESCRIPTION OF THE PREFERRED EMBODIMENTS

According to the present specification, the numerical range expressed by using "to" means a range including numerical values described before and after "to" as a minimum value and a maximum value.

In the present specification, "(meth)acryl" represents either or both of acryl and methacryl, "(meth)acrylate" represents either or both of acrylate and methacrylate, and "(meth)acrylamide" represents either or both of acrylamide and methacrylamide.

In the present specification, "mass%" and "weight%" have the same definition, and "part by mass" and "part by weight" have the same definition. In the present specification, a combination of two or more preferred aspects is a more preferable aspect.

In the present specification, in the case where the substitution or non-substitution is not described with respect to the description of a group in the compound represented by a formula, in a case where the above group can further have a substituent, unless described otherwise, not only an unsubstituted group but also a group having a substituent are included. For example, in a formula, in a case where there is an expression "R represents an alkyl group, an aryl group, or a heterocyclic group", the expression means that "R represents a substituted alkyl group, a substituted alkyl group, an unsubstituted aryl group, an unsubstituted aryl group, a substituted heterocyclic group, or an unsubstituted heterocyclic group.

In the present specification, 20 mass% to 60 mass% of a constitutional unit a-1 represented by Formula 1 with respect to the total mass of the pigment and the polymer dispersant is also referred to as the "constitutional unit a-1".

In the present specification, the expression "step" includes not only an independent step but also a case where the step is not clearly distinguished from other steps as long as the intended purpose of the step is achieved.

(Aqueous pigment dispersion)

An aqueous pigment dispersion (hereinafter, simply referred to as an "aqueous pigment dispersion") according

to the present disclosure includes water, a water-soluble organic solvent, a pigment, a polymer dispersant including 20 mass% to 60 mass% of the constitutional unit a-1 represented by Formula 1 with respect to the total mass of the polymer dispersant, 10 mass% to 40 mass% of a constitutional unit a-2 represented by Formula 2 with respect to the total mass of the polymer dispersant, a constitutional unit a-3 having an acidic group, and a constitutional unit a-4 having a structure selected from HEMA, DAAAm, or PME, and an amine compound represented by Formula 3.

As described above, further improvement of the preservation stability of the aqueous pigment dispersion is desired.

Particularly, with respect to the ink jet recording method, while usage environments and usage aspects vary, further improvement of the preservation stability of the aqueous pigment dispersion used in the aqueous ink composition, and improvement of the preservation stability of the aqueous ink composition are desired.

The present inventors have diligently reviewed to find that the aqueous pigment dispersion according to the present disclosure has excellent preservation stability.

The present inventors have found that it is possible to easily obtain an aqueous ink composition having excellent preservation stability by using the aqueous pigment dispersion according to the present disclosure.

Although the detailed action mechanism for obtaining these effects is unknown, it is assumed as follows.

It is considered that the polymer dispersant included in the aqueous pigment dispersion according to the present embodiment has high adsorbability to the pigment by including the constitutional unit a-1 represented by Formula 1 and the constitutional unit a-2 represented by Formula 2 which are two constitutional units having different adsorbability to the pigment by specific contents, respectively.

It is considered that the aqueous pigment dispersion according to the present disclosure contains an amine compound such that at least a portion of the acidic group included in the polymer dispersant is neutralized. As a result, it is considered that the aqueous pigment dispersion according to the present disclosure has excellent preservation stability, because the water solubility of the polymer dispersant is improved, the interaction with the pigment is excellent, and thus the dispersibility of the pigment is excellent.

In a case where the aqueous pigment dispersion according to the present disclosure is used as a raw material of an aqueous ink composition by the mechanism as described above, it is considered that an aqueous ink composition having excellent preservation stability is easily obtained.

Hereinafter, each component included in the aqueous pigment dispersion according to the present disclosure is described.

<Water>

The aqueous pigment dispersion according to the present disclosure contains water.

The amount of water is not particularly limited, and the content of water is preferably 5 mass% or more, more preferably 10 mass% or more, even more preferably 20 mass% or more, and particularly preferably 30 mass% or more with respect to the total mass of the aqueous pigment dispersion. The upper limit of the content of water is not particularly limited, but is preferably 95 mass% or less and more preferably 90 mass% or less.

<Water-soluble organic solvent>

The aqueous pigment dispersion according to the present disclosure contains a water-soluble organic solvent.

The "water-solubility" in the present disclosure means that the solubility to water at 20°C is 5 mass% or more.

Examples of the water-soluble organic solvent include an alcohol compound, a ketone compound, an ether compound, an amide compound, a nitrile compound, and a sulfone compound.

Examples of the alcohol compound include ethanol, isopropanol, n-butanol, t-butanol, isobutanol, diacetone alcohol, diethylene glycol, ethylene glycol, dipropylene glycol, propylene glycol, and glycerin.

Examples of the ketone compound include acetone, methyl ethyl ketone, diethyl ketone, and methyl isobutyl ketone.

Examples of the ether compound include dibutyl ether, tetrahydrofuran, and dioxane.

Examples of the amide compound include dimethylformamide and diethylformamide.

Examples of the nitrile compound include acetonitrile.

Examples of the sulfone compound include dimethyl sulfoxide, dimethyl sulfone, and sulfolane.

The content of the water-soluble organic solvent is preferably 3 mass% to 50 mass%, more preferably 10 mass% to 45 mass%, and even more preferably 15 mass% to 40 mass% with respect to the total mass of the aqueous pigment dispersion.

The aqueous pigment dispersion according to the present disclosure may contain a water-soluble organic solvent singly or may contain two or more kinds thereof in combination. In a case where the aqueous pigment dispersion according to the present disclosure includes two or more kinds of the water-soluble organic solvents in combination, the

content thereof refers to a total content of the water-soluble organic solvents.

<Pigment>

The aqueous pigment dispersion according to the present disclosure contains a pigment.

The kinds of the pigment used in the aqueous pigment dispersion according to the present disclosure are not particularly limited, and well-known organic or inorganic pigments can be used.

Examples of the organic pigment include an azo pigment, a polycyclic pigment, a chelate dye, a nitro pigment, a nitroso pigment, and aniline black. Among these, an azo pigment and a polycyclic pigment are preferable.

Examples of the azo pigment include azo lake, an insoluble azo pigment, a condensed azo pigment, and a chelated azo pigment.

Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment.

Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

The aqueous pigment dispersion according to the present embodiment preferably includes carbon black as a pigment.

Generally, since carbon black has a hydrophilic surface, carbon black hardly interacts with a dispersant and is hardly dispersed. However, in a case where the aqueous pigment dispersion according to the present disclosure contains an amine compound, the polymer dispersant and the hydrophilic surface interact with each other, and thus it is considered that, even in a case where carbon black is used, excellent preservation stability can be obtained.

In view of being used as aqueous ink, the aqueous pigment dispersion according to the present embodiment preferably contains at least one kind selected from the group consisting of a magenta pigment, a cyan pigment, a yellow pigment, and carbon black.

The dibutyl phthalate (DBP) absorption amount of the carbon black pigment is not particularly limited, but in view of tone and print density, the absorption amount is preferably 30 ml/100 g to 200 ml/100 g and more preferably 50 ml/100 g to 150 ml/100 g. The DBP absorption amount is measured by the JIS K6221 A method.

The BET specific surface area of the carbon black pigment is not particularly limited, but in view of the print density and the preservation stability, the BET specific surface area is preferably 30 $m^2/g$ to 450 $m^2/g$ and more preferably 200 $m^2/g$ to 400 $m^2/g$.

Examples of the carbon black pigment include carbon black pigments manufactured by well-known methods such as a contact method, a furnace method, or a thermal method.

Specific examples thereof include Raven 1250, Raven 1200, Raven 1190 ULTRA, Raven 1170, Raven 1255, Raven 1080 ULTRA, Raven 1060 ULTRA, Raven 1040, Raven 1035, Raven 1020, Raven 1000, Raven 900, Raven 890, Raven 850, Raven 780 ULTRA, Raven 860 Ultra, Raven 520, Raven 500, Raven 450, Raven 460, Raven 415, Raven 14, and Conductex 7055 Ultra (manufactured by Columbian Chemicals Company), Regal 400R, Regal 330R, Regal 660R, Mogul L, Black Pearls L, Regal 99, Regal 350, MONARCH 280, and MONARCH 120 (above are manufactured by Cabot Corporation), Color Black S160, Color Black S170, Printex 35, Printex U, Printex V, Printex 140U, Printex 140V, Printex 300, Printex 25, Printex 200, Printex A, Printex G, Special Black 5, Special Black 4A, Special Black4, Special Black 550, Special Black 350, Special Black 250, Special Black 100, NEROX 3500, NEROX 1000, and NEROX 2500 (above are manufactured by Orion Engineered Carbons GmbH), No. 10, No. 20, No. 25, No. 33, No. 40, No. 45, No. 47, No. 52, No. 85, No. 95, No. 260, MA7, MA8, MA11, MA77, MA100, MA220, MA230, and MA600 (above are manufactured by Mitsubishi Chemical Corporation). However, the present invention is not limited to these.

Specific examples of the pigment that can be used in the aqueous pigment dispersion according to the present disclosure include pigments disclosed in paragraphs 0142 to 0145 of JP2007-100071A.

The pigment concentration in the aqueous pigment dispersion according to the present disclosure is not particularly limited, and the pigment content is preferably 5 mass% to 25 mass% and more preferably 10 mass% to 20 mass% with respect to the total mass of the aqueous pigment dispersion.

The volume average particle diameter of the pigment dispersed in the aqueous pigment dispersion according to the present disclosure is preferably 80 nm to 150 nm and more preferably 90 nm to 120 nm. The volume average particle diameter of the pigment of the aqueous pigment dispersion is measured by the dynamic light scattering method by using a nanotrac particle size distribution measuring apparatus UPA-EX150 (manufactured by Nikkiso Co., Ltd.).

The color reproducibility in a case of being used in the aqueous ink composition can be improved by causing a particle diameter of the pigment in the pigment dispersion to be 200 nm or less. It is possible to improve the light resistance of the image that can be obtained in a case of using the aqueous ink composition by causing the particle diameter of the pigment of the pigment dispersion to be 10 nm or more.

<Polymer dispersant>

The pigment dispersion according to the present disclosure contains the polymer dispersant including 20 mass% to 60 mass% of the constitutional unit a-1 represented by Formula 1 with respect to the total mass of the polymer dispersant, 10 mass% to 40 mass% of the constitutional unit a-2 represented by Formula 2 with respect to the total mass of the polymer dispersant, and the constitutional unit a-3 having an acidic group.

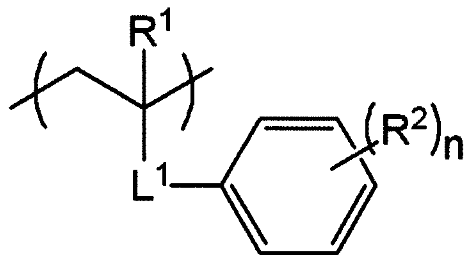

Formula 1

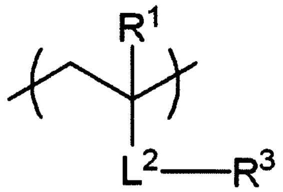

Formula 2

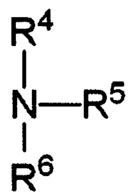

Formula 3

In Formula 1 or 2, $R^1$ represents a hydrogen atom or a methyl group, $L^1$ represents a single bond, an alkylene group having 1 to 12 carbon atoms, an alkenylene group having 2 to 12 carbon atoms, or a divalent linking group obtained by combining two or more groups selected from -C(=O)-, -O-, -S-, and $-NR^7-$, $R^2$ represents an alkyl group having 1 to 6 carbon atoms, an alkoxy group having 1 to 15 carbon atoms, an amino group, a halogen atom, an aryloxy group having 6 to 20 carbon atoms, or a silyl group, $R^7$ represents a hydrogen atom or an alkyl group having 1 to 6 carbon atoms, n represents an integer of 0 to 5, $L^2$ represents -C(=O)O-, -OC(=O)-, or $-C(=O)NR^7-$, and $R^3$ represents an alkyl group having 12 or more carbon atoms.

[Constitutional unit a-1]

The constitutional unit a-1 is a constitutional unit represented by Formula 1.

In Formula 1, $R^1$ is preferably a methyl group.

In Formula 1, $L^1$ is preferably a single bond or a group represented by Formula 1-1 or 1-2 and is more preferably a single bond or a group represented by Formula 1-1.

The alkylene group in $L^1$ is preferably an alkylene group having 2 to 10 carbon atoms, more preferably an alkylene group having 1 to 5 carbon atoms, and more preferably an alkylene group having 1 to 3 carbon atoms. The alkylene group may have a linear shape or a branched shape.

The alkenylene group in $L^1$ is preferably an alkenylene group having 2 to 10 carbon atoms, more preferably an alkenylene group having 2 to 6 carbon atoms, and even more preferably an alkenylene group having 2 to 4 carbon atoms. The alkenylene group may have a linear shape or a branched shape.

In Formula 1, $R^7$ is preferably a hydrogen atom.

In Formula 1, $R^2$'s each independently and preferably are an alkyl group having 1 to 6 carbon atoms, an alkoxy group having 1 to 6 carbon atoms, a halogen atom, and an aryloxy group having 6 to 20 carbon atoms and more preferably an alkyl group having 1 to 6 carbon atoms, a halogen atom, and an aryloxy group having 6 to 20 carbon atoms.

The alkyl group in $R^2$ and the alkyl group in the alkoxy group may have a linear shape or a branched shape.

The aryloxy group in $R^2$ is preferably a naphthyloxy group or a phenyloxy group and more preferably a phenyloxy group.

In Formula 1, n represents an integer of 0 to 5, preferably 0 or 1, and more preferably 0.

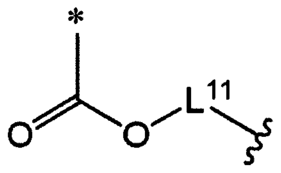

Formula 1-1

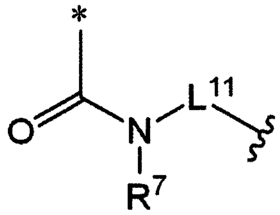

Formula 1-2

In Formulae 1-1 and 1-2, $L^{11}$ represents an alkylene group having 1 to 12 carbon atoms, an alkenylene group having 2 to 12 carbon atoms, -O-, -S-, or a group obtained by combining these, preferably an alkylene group having 1 to 12 carbon atoms, -O-, or a group obtained by combining these, more preferably an alkylene group having 1 to 8 carbon atoms, -O-, or a group obtained by combining these, and even more preferably an alkylene group having 1 to 4 carbon atoms, -O-, or a group obtained by combining these.

Examples of the preferable aspect of $L^{11}$ include a divalent linking group represented by Formula 1-3, 1-4, or 1-5.

In Formula 1-2, $R^7$ is the same as $R^7$ in Formula 1, and a preferable aspect is also the same.

In Formulae 1-1 and 1-2, * represents a bonding site at which $R^1$ in Formula 1 bonds to a carbon atom, and a wavy line part represents a bonding site to a benzene ring in Formula 1.

$$a\text{-}(CH_2\text{-}CH_2\text{-}O)_{n3}\text{-}b$$

Formula 1-3

$$a\text{-}(CH_2)_{n4}\text{-}O\text{-}b$$

Formula 1-4

$$a\text{-}(CH_2)_{n5}\text{-}b$$

Formula 1-5

In Formulae 1-3 to 1-5, a represents a bonding site to O in Formula 1-1 or $NR^7$ in Formula 1-2, b represents a bonding site to a benzene ring in Formula 1 in the same manner as the wavy line parts in Formulae 1-1 and 1-2, n3 represents an integer of 1 to 10, n4 represents an integer of 1 to 5, and n5 represents an integer of 1 to 5.

In Formula 1-3, n3 is preferably an integer of 1 to 5.

In Formula 1-4, n4 is preferably an integer of 1 to 3 and more preferably 2.

In Formula 1-5, n5 is preferably an integer of 1 to 3, more preferably 1 or 2, and even more preferably 1.

The constitutional unit a-1 is preferably a constitutional unit represented by styrene, benzyl (meth)acrylate, phenoxyethyl (meth)acrylate, 2-hydroxy-3-phenoxypropyl (meth)acrylate, or phenoxydiethylene glycol (meth)acrylate, more preferably a constitutional unit represented by benzyl (meth)acrylate or phenoxyethyl (meth)acrylate, and even more preferably a constitutional unit represented by phenoxyethyl (meth)acrylate.

-Content of constitutional unit a-1-

The content of the constitutional unit a-1 is 20 mass% to 60 mass% with respect to the total mass of the polymer dispersant, and in view of the preservation stability of the aqueous pigment dispersion, the content thereof is preferably 25 mass% to 50 mass% and more preferably 30 mass% to 45 mass%.

The polymer dispersant used in the present disclosure may contain the constitutional unit a-1 singly, or may contain two or more kinds thereof. In a case where the polymer dispersant used in the present disclosure contains two or more kinds of the constitutional units a-1, the content thereof refers to a total content of two or more kinds of the constitutional units a-1.

[Constitutional unit a-2]

The constitutional unit a-2 is a constitutional unit represented by Formula 2.

In Formula 2, $L^2$ represents -C(=O)O-, -OC(=O)-, or -C(=O)$NR^7$-, m represents -C(=O)O- or -C(=O)$NR^7$- and preferably -C(=O)O-.

$R^7$ is the same as $R^7$ in Formula 1, and a preferable aspect is also the same.

The denotation of -C(=O)O- means that a carbon atom in -C(=O)O- and a carbon atom to which $R^1$ in Formula

2 is bonded are directly bonded to each other, and the denotation of -OC(=O)- means that a carbon atom in -OC(=O)- and a carbon atom to which $R^1$ in Formula 2 is bonded are directly bonded to each other.

The denotation of -C(=O)$NR^7$- means that a carbon atom in -C(=O)$NR^7$- and a carbon atom to which $R^1$ in Formula 2 is bonded are directly bonded to each other.

In Formula 2, $R^3$ represents an alkyl group having 12 or more carbon atoms, preferably an alkyl group having 12 to 22 carbon atoms, more preferably an alkyl group having 12 to 20 carbon atoms, and even more preferably an alkyl group having 12 to 18 carbon atoms. The alkyl group may have a linear shape or a branched shape.

The constitutional unit a-2 is preferably a constitutional unit derived from an alkyl (meth)acrylate compound of an alkyl group having 12 or more carbon atoms or an alkyl (meth)acrylamide compound of an alkyl group having 12 or more carbon atoms.

-Content of constitutional unit a-2-

The content of the constitutional unit a-2 is 10 mass% to 40 mass% with respect to the total mass of the polymer dispersant, and in view of preservation stability of the aqueous pigment dispersion, the content thereof is preferably 10 mass% to 30 mass% and more preferably 20 mass% to 30 mass%.

The polymer dispersant used in the present disclosure may contain the constitutional unit a-2 singly, and may contain two or more kinds thereof. In a case where the polymer dispersant used in the present disclosure contains two or more kinds of the constitutional units a-2, the content thereof is a total content of the two or more kinds of the constitutional units a-2.

[Constitutional unit a-3]

The constitutional unit a-3 is a constitutional unit having an acidic group.

The acidic group is a substituent having a dissociative proton, and means, for example, a group exhibiting acidity such as a carboxy group, a phosphonyl group, a phosphoryl group, a sulfo group, or a boric acid group. Among these, the acidic group is preferably a carboxy group, a sulfo group, or a phosphonyl group, and more preferably a carboxy group.

The acidic group may have a form of being dissociated by releasing a proton or may be a salt.

In the aqueous pigment dispersion, the constitutional unit a-3 may form a salt with the amine compound.

The constitutional unit a-3 is preferably a constitutional unit derived from (meth)acrylic acid, crotonic acid, itaconic acid, maleic acid, fumaric acid, bis(methacryloxyethyl) phosphate, and 2-acrylamido-2-methylpropanesulfonic acid and more preferably a constitutional unit derived from methacrylic acid or acrylic acid.

-Content of constitutional unit a-3-

The content of the constitutional unit a-3 is preferably 3 mass% to 40 mass% and more preferably 5 mass% to 30 mass% with respect to the total mass of the polymer dispersant in view of the preservation stability of the aqueous pigment dispersion.

The content of the constitutional unit a-3 is an amount in which the acid value of the polymer dispersant is preferably 0.5 mmol/g to 3.5 mmol/g (preferably 1.0 mmol/g to 3.0 mmol/g and more preferably 1.0 mmol/g to 2.5 mmol/g).

The polymer dispersant used in the present disclosure may contain the constitutional unit a-3 singly or may contain two or more kinds thereof. In a case where the polymer dispersant used in the present disclosure contains two or more kinds of the constitutional units a-3, the content is a total content of the two or more kinds of the constitutional units a-3.

[Constitutional unit a-4]

The polymer dispersant used in the present embodiment further contains a constitutional unit a-4, which is a constitutional unit other than the constitutional units a-1, a-2 and a-3.

The constitutional unit a-4 has a structure selected from HEMA, DAAAm, or PME.

-Content of constitutional unit a-4-

The content of the constitutional unit a-4 is preferably 3 mass% to 40 mass% and more preferably 5 mass% to 30 mass% with respect to the total mass of the polymer dispersant, in view of the preservation stability of the aqueous pigment dispersion.

The polymer dispersant used in the present disclosure may contain the constitutional unit a-4 singly and may

contain two or more kinds thereof. In a case where the polymer dispersant used in the present disclosure contains two or more kinds of the constitutional units a-4, the content thereof is a total content two or more kinds of the constitutional units a-4.

[Content of polymer dispersant]

The content of the polymer dispersant is preferably 3 mass% to 50 mass%, more preferably 5 mass% to 40 mass%, and even more preferably 10 mass% to 30 mass% with respect to the total mass of the aqueous pigment dispersion.

[Acid value of polymer dispersant]

In view of the preservation stability of the aqueous pigment dispersion, the acid value of the polymer dispersant is preferably 0.5 mmol/g to 3.5 mmol/g, more preferably 1.0 mmol/g to 3.0 mmol/g, and even more preferably 1.5 mmol/g to 2.5 mmol/g.
The acid value of the polymer dispersant is measured in conformity with JIS K0070 and calculated as 1 mmol/g = 56.1 mg KOH/g.

[Weight-average molecular weight of polymer dispersant]

The weight-average molecular weight of the polymer dispersant is preferably 5,000 to 50,000, more preferably 8,000 to 40,000, and even more preferably 10,000 to 30,000 in view of increasing the dispersibility and the preservation stability.
Since the polymer dispersant used in the present disclosure has the constitutional unit a-1 represented by Formula 1 and the constitutional unit a-2 represented by Formula 2 in specific content ratios, both of the adsorption rate and the adsorption stability to the surface of the pigment are improved, and thus even in a case where a molecular weight of the polymer dispersant is the weight-average molecular weight of about 5,000 to 50,000, both of the high dispersibility and the high dispersion stability can be achieved at a high level. It is preferable that the weight-average molecular weight is 5,000 to 50,000, in view of the improvement in the dispersion speed and the low viscosity of the aqueous pigment dispersion.
In the present specification, the weight-average molecular weight is measured by gel permeation chromatography (GPC). In the GPC, HLC-8220 GPC (manufactured by Tosoh Corporation) is used, three columns of TSKgeL Super HZM-H, TSKgeL Super HZ4000, and TSKgeL Super HZ2000 (manufactured by Tosoh Corporation, 4.6 mm ID × 15 cm) were connected in series as columns, and N-methylpyrrolidone (NMP) is used as an eluent. As the conditions, a sample concentration was 0.35 mass%, a flow rate was 0.35 ml/min, a sample injection amount was 10 μl, a measurement temperature was 40°C, and a refractive index (RI) detector (differential refractive index detector) was used. The calibration curve is manufactured from eight samples of "Standard sample TSK standard, polystyrene" manufactured by Tosoh Corporation: "F-40", "F-20", "F-4", "F-1", "A-5000", "A-2500", "A-1000", and "n-propylbenzene".
It is preferable that the polymer dispersant solution does not precipitate in a case where water is added at a ratio of 1:3 or more and less than 1:5 (= polymer dispersant solution:water) at 20°C, and it is more preferable that the polymer dispersant solution does not precipitate in a case where water is added at a ratio of 1:5 or more.
Here, the polymer dispersant solution is a mixture of the polymer dispersant, the amine compound, and the water-soluble organic solvent, and the solid content thereof is 30 mass%.

[I/O value]

In view of preservation stability of the aqueous pigment dispersion, the I/O value (inorganic/organic value) of the polymer dispersant is 0.50 to 0.80 and preferably 0.50 to 0.75.
The I/O value is a value obtained by organic conceptually handling the polarity of various organic compounds which are also referred to as an inorganic value/organic value, and one of the functional group contribution methods for setting parameters for each functional group.
The I/O value is specifically disclosed in Organic Conceptual Diagram (Koda Yoshio, Sankyo Publishing Co., Ltd. (1984)). The concept of the I/O value represents properties of a compound by dividing the compound into an organic group exhibiting covalent bonding properties and an inorganic group exhibiting ionic bonding properties, and positioning all of the organic compounds one point by one in an orthogonal coordinate identified as an organic axis and an inorganic axis.
The above inorganic value is a value obtained by digitizing the influence of various substituents and bonds included in the organic compound at the boiling point in terms of the hydroxyl group. Specifically, in a case where the

distance between the boiling point curve of the linear alcohol and the boiling point curve of the linear paraffin is set near the carbon number of 5, the distance becomes about 100°C, and thus the influence of one hydroxyl group is set to 100 as a numerical value, so as to set the value obtained by digitizing the influence on various boiling points of various substituents, or various bonds based on these numerical values to be the inorganic value of the substituent included in the organic compound. For example, the inorganic value of the -COOH group is 150, and the inorganic value of the double bond is 2. Therefore, the inorganic value of a certain kind of the organic compound means the sum of the inorganic values of various substituents and bonds included in the compound.

The methylene group in the molecule is set as a unit, and the above organic value is defined in terms of the influence on the boiling point of the carbon atom representing the methylene group. That is, since the average value of the boiling point increase due to addition of one carbon at around 5 to 10 carbon atoms of the linear saturated hydrocarbon compound is 20°C, the organic value of one carbon atom is set to 20 based on this, and a value obtained by digitizing the influence on various boiling points of the various substituents and bonds becomes the organic value. For example, the organic value of the nitro group ($-NO_2$) is 70.

The I/O value that is closer to 0 represents that the organic compound is nonpolar (hydrophobicity and organic properties are great), and the greater I/O value represents that the organic compound is polar (hydrophilicity and inorganic properties are great).

In the present disclosure, the I/O value of the polymer dispersant means a value obtained by the following method. I/O values (= I value / O value) of each monomer for constituting the polymer dispersant is calculated based on the organicity (O value) and inorganicity (I value) disclosed in page 13 of Organic Conceptual Diagram - Basic and Application - written by Koda, Yoshio (1984). With respect to each of the monomers constituting the polymer, the product of the (I/O value) and the (mol% in the polymer) is calculated, these are summed up, the third place after the decimal point was rounded off, to obtain the I/O value of the polymer dispersant.

However, as a method for calculating the inorganic value of each monomer, generally, a double bond is added as inorganicity of 2, but in a case of being polymerized, double bonds disappear, and thus in the present disclosure, the I/O value of the polymer dispersant was calculated by using numerical values to which a value for the double bonds are not added, as the inorganic value of the monomer.

In the present disclosure, the I/O value of the polymer dispersant can be adjusted by adjusting the structure and the content ratio of the monomer constituting the polymer dispersant.

Specific examples of the polymer dispersant used in the present disclosure are described below, but the present disclosure is not limited to these. In the specific examples below, denotations in the section of the constitutional units a-1 to a-4 represent structures of the respective constitutional units, denotations of mass% mean contents of the respective constitutional units, numerical values in the section of Mw represent weight-average molecular weights, and denotations of "-" represent that the corresponding constitutional unit is not contained. In Table 1, polymer dispersants P-5, P-32 and P-34 are not in accordance with the present invention.

[Table 1]

| Polymer dispersant | Constitutional unit a-1 | Mass% | Constitutional unit a-2 | Mass% | Constitutional unit a-3 | Mass% | Constitutional unit a-4 | Mass% | Weight-average molecular weight (Mw) |
|---|---|---|---|---|---|---|---|---|---|
| P-1 | BzMA | 50 | C18MA | 10 | MAA | 14 | HEMA | 26 | 30000 |
| P-2 | BzMA | 39 | C18MA | 20 | MAA | 14 | HEMA | 27 | 23000 |
| P-3 | BzMA | 22 | C18MA | 30 | MAA | 14 | HEMA | 34 | 20000 |
| P-4 | BzMA | 20 | C18MA | 40 | MAA | 14 | HEMA | 26 | 10000 |
| P-5 | BzMA | 50 | C18MA | 20 | MAA | 30 | - | - | 20000 |
| P-6 | BzMA | 39 | C18MA | 20 | MAA | 14 | HEMA | 27 | 22000 |
| P-7 | BzMA | 39 | C18MA | 20 | MAA | 14 | HEMA | 27 | 22000 |
| P-8 | BzMA | 39 | C18MA | 20 | MAA | 14 | HEMA | 27 | 22000 |
| P-9 | BzMA | 41 | C18MA | 20 | MAA | 19 | HEMA | 20 | 23000 |
| P-10 | BzMA | 28 | C18MA | 30 | MAA | 18 | HEMA | 24 | 20000 |
| P-11 | BzMA | 38 | C18MA | 20 | MAA | 12 | HEMA | 30 | 23000 |
| P-12 | BzMA | 24 | C18MA | 30 | MAA | 10 | HEMA | 36 | 20000 |
| P-13 | BzMA | 36 | C18MA | 20 | MAA | 9 | HEMA | 35 | 20000 |
| P-14 | BzMA | 43 | C18MA | 20 | MAA | 23 | HEMA | 14 | 23000 |
| P-15 | BzMA | 34 | C18MA | 20 | MAA | 14 | HEMA | 32 | 19000 |
| P-16 | BzMA | 44 | C18MA | 20 | MAA | 14 | HEMA | 22 | 20000 |
| P-17 | BzMA | 31 | C18MA | 30 | MAA | 14 | HEMA | 25 | 24000 |
| P-18 | BzMA | 23 | C18MA | 30 | MAA | 14 | HEMA | 33 | 35000 |
| P-19 | BzMA | 23 | C18MA | 30 | MAA | 14 | HEMA | 33 | 4500 |
| P-20 | BzMA | 39 | C18MA | 20 | MAA | 14 | HEMA | 27 | 23000 |
| P-21 | BzMA | 50 | C18MA | 20 | MAA | 14 | DMAAm | 16 | 18000 |
| P-22 | BzMA | 41 | C18MA | 20 | MAA | 14 | PME | 25 | 18000 |
| P-23 | BzMA | 44 | C18MA | 20 | MAA | 14 | DAAAm | 22 | 16000 |
| P-24 | PEA | 30 | C18MA | 20 | MAA | 30 | HEMA | 14 | 20000 |
| P-25 | POB-A | 30 | C18MA | 20 | MAA | 26 | HEMA | 14 | 20000 |

(continued)

| Polymer dispersant | Constitutional unit a-1 | Mass% | Constitutional unit a-2 | Mass% | Constitutional unit a-3 | Mass% | Constitutional unit a-4 | Mass% | Weight-average molecular weight (Mw) |
|---|---|---|---|---|---|---|---|---|---|
| P-26 | St | 20 | C18MA | 20 | MAA | 26 | HEMA | 14 | 20000 |
| P-27 | BzMA | 38 | C22MA | 20 | MAA | 14 | HEMA | 28 | 20000 |
| P-28 | BzMA | 38 | C12MA | 20 | MAA | 14 | HEMA | 28 | 20000 |
| P-29 | BzMA | 47 | C18MA | 15 | MAA | 4 | HEMA | 34 | 20000 |
| P-30 | BzMA | 32 | C18MA | 30 | MAA | 5 | HEMA | 33 | 20000 |
| P-31 | BzMA | 20 | C18MA | 40 | MAA | 35 | HEMA | 5 | 20000 |
| P-32 | BzMA | 50 | C18MA | 30 | MAA | 12 | HEMA | 8 | 20000 |
| P-33 | BzMA | 60 | C18MA | 19 | MAA | 14 | HEMA | 7 | 20000 |
| P-34 | BzMA | 29 | C18MA | 20 | MAA | 20 | HEMA | 31 | 10000 |
| P-35 | BzMA | 22 | C18MA | 28 | MAA | 23 | HEMA | 27 | 30000 |
| P-36 | BzMA | 50 | C18MA | 10 | MAA | 14 | HEMA | 26 | 55000 |
| P-37 | BzMA | 23 | C18MA | 30 | MAA | 14 | HEMA | 33 | 40000 |
| P-38 | BzMA | 45 | C18MA | 20 | PPE | 25 | HEMA | 10 | 15000 |
| P-39 | BzMA | 45 | C18MA | 20 | AMPS | 15 | HEMA | 20 | 15000 |
| P-40 | BzMA | 50 | C18MA | 10 | MAA | 14 | HEMA | 26 | 10000 |
| P-41 | BzMA | 39 | C18MA | 20 | MAA | 14 | HEMA | 27 | 22000 |

In the above table, details of the structures denoted by abbreviations are as follows. In the following structures, n represents a repeating number.

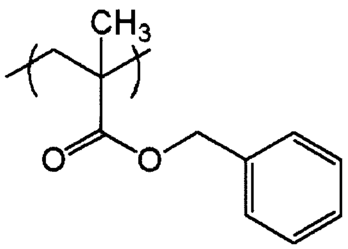

BzMA

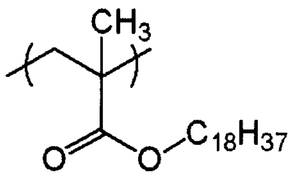

C18MA

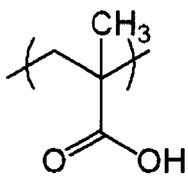

MAA

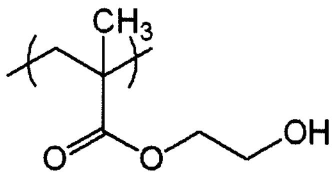

HEMA

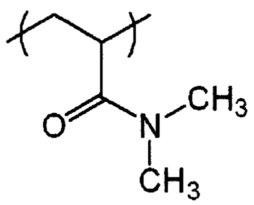

DMAAm

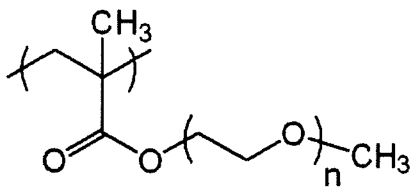

n=9

PME

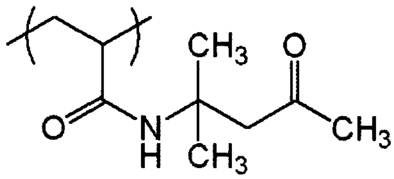

DAAAm

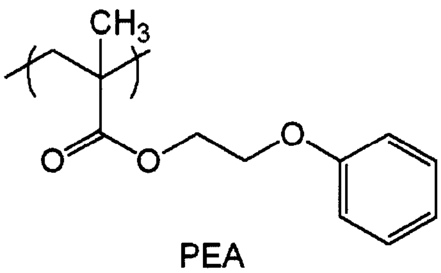

PEA

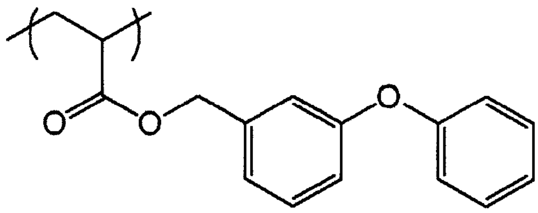

POB-A

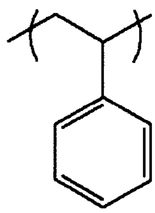

St

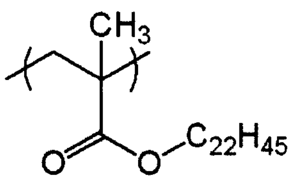

C22MA

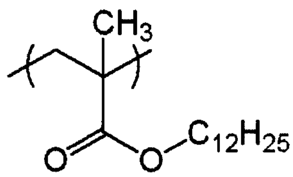

C12MA

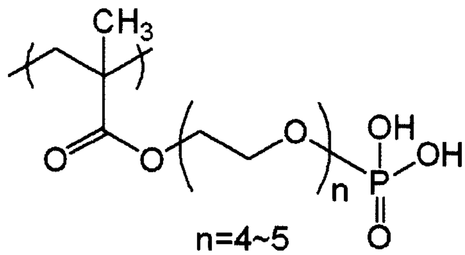

n=4~5

PPE

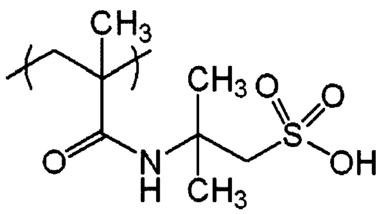

AMPS

<Amine compound>

The aqueous pigment dispersion according to the present disclosure contains an amine compound represented by Formula 3.

The amine compound may be present in the aqueous pigment dispersion as an ammonium cation or may form a salt with an acidic group included in the above polymer dispersant to neutralize the acidic group.

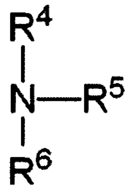

Formula 3

In Formula 3, $R^4$ to $R^6$ each independently represent a hydrogen atom or a substituent, preferably a hydrogen atom, an alkyl group, or a hydroxyalkyl group, and more preferably an alkyl group or a hydroxyalkyl group.

The alkyl group is preferably an alkyl group having 1 to 10 carbon atoms and more preferably an alkyl group having 1 to 4 carbon atoms. The alkyl group may have a linear shape or a branched shape but preferably has a linear shape.

With respect to the hydroxyalkyl group, the number of carbon atoms of the alkyl group is preferably 1 to 10 and more preferably 1 to 4. The alkyl group may have a linear shape or a branched shape but preferably has a linear shape. The hydroxyalkyl group is preferably a $\omega$-hydroxyalkyl group having a hydroxy group in a terminal of the alkyl group.

The amine compound may be any one of an inorganic amine compound, a primary amine compound, a secondary amine compound, or a tertiary amine compound, but is preferably a secondary amine compound or a tertiary amine compound.

[Alkanolamine compound]

In view of the preservation stability of the aqueous pigment dispersion, the amine compound is preferably an alkanolamine compound.

The alkanolamine compound may be any one of a monoalkanolamine compound, a dialkanolamine compound, or a trialkanolamine compound, but in view of the preservation stability of the aqueous pigment dispersion, a monoalkanolamine compound or a dialkanolamine compound is preferable.

As the monoalkanolamine compound, a dialkylmonoalkanolamine compound is preferable.

As the dialkanolamine compound, a monoalkyl dialkanolamine compound is preferable.

Specific examples of the amine compound include monomethylamine, dimethylamine, trimethylamine, monoethylamine, diethylamine, triethylamine, monopropylamine, dipropylamine, tripropylamine, monoisopropylamine, diisopropylamine, triisopropylamine, monobutylamine, dibutylamine, tributylamine, dimethylaminoethanol, aminomethylpropanediol (2-amino-2-methyl-1,3-propanol), aminoethylpropanediol (2-amino-2-ethyl-1,3-propanol), and 2-amino-2-methyl-1-propanol.

Among these, in view of the preservation stability, dimethylaminoethanol, aminomethylpropanediol, or aminoethylpropanediol is preferable.

[Content of amine compound]

The content of the amine compound is preferably 20 mol% to 200 mol%, more preferably 25 mol% to 150 mol%, and even more preferably 40 mol% to 100 mol% with respect to the total amount of the acidic group of the polymer dispersant.

The amine compound may be used singly or two or more kinds thereof may be used in combination. According to the present disclosure, in a case where two or more kinds of the amine compounds are used in combination, it is preferable that the total amount of the amine compounds is in the above range.

<Characteristics of aqueous pigment dispersion>

[Content ratio]

In the aqueous pigment dispersion according to the present disclosure, the content ratio of the content of the pigment and the content of the polymer dispersant is not particularly limited, as long as the pigment can be stably

dispersed in the aqueous pigment dispersion, but the content ratio is preferably the pigment:the polymer dispersant = 1:0.1 to 1:2 (mass ratio) and more preferably 1:0.2 to 1:1 (mass ratio).

In the aqueous pigment dispersion according to the present disclosure, the content ratio of the content of the polymer dispersant and the content of the amine compound is not particularly limited, as long as the pigment can be stably dispersed in the aqueous pigment dispersion, but the content ratio is preferably the polymer dispersant:the amine compound = 1:0.1 to 1:2 (mass ratio) and more preferably 1:0.2 to 1:1 (mass ratio).

[Viscosity]

The viscosity of the aqueous pigment dispersion according to the present disclosure depends on the pigment concentration, but is generally 3 mPa·s to 100 mPa·s and more preferably 5 mPa·s to 50 mPa·s. The viscosity of the aqueous pigment dispersion is measured at 25°C by using a TV-22 type viscometer (manufactured by Toki Sangyo Co., Ltd.).

[pH]

In view of the dispersion stability, the pH of the aqueous pigment dispersion according to the present disclosure is preferably pH 6 to 11, more preferably pH 7 to 10, and even more preferably pH 7 to 9.

<Preparation of pigment dispersion>

The method of preparing the aqueous pigment dispersion according to the present disclosure is not particularly limited, and for example, at least water, a water-soluble organic solvent, a pigment, a polymer dispersant, and an amine compound are mixed, and a dispersion treatment is performed, so as to obtain the aqueous pigment dispersion according to the present disclosure.

In the aqueous pigment dispersion according to the present disclosure, a crosslinking structure can be formed in the polymer dispersant, but it is preferable that a crosslinking structure is not formed. That is, it is preferable that the polymer dispersant according to the present embodiment is not a double-strand polymer or a network polymer, and a linear polymer, a comb-like polymer, or a star-like polymer is preferable.

Examples of the forming of the crosslinking structure include a method disclosed in JP2009-190379A.

The liquid stability of the ink is improved by using a crosslinking agent such as an epoxy compound and crosslinking an acidic group in the polymer dispersant, but the aqueous pigment dispersion according to the present disclosure contains an amine compound, and thus even in a case where a crosslinking structure is not formed, preservation stability is excellent.

(Aqueous ink composition)

The aqueous ink composition according to the present disclosure is an aqueous ink composition using the aqueous pigment dispersion according to the present disclosure.

As the aqueous ink composition according to the present disclosure, the aqueous pigment dispersion according to the present disclosure may be used without change, but the aqueous pigment dispersion according to the present disclosure may be used as a raw material to prepare the aqueous ink composition. More specifically, it is preferable that the aqueous ink composition according to the present disclosure is prepared by mixing the aqueous pigment dispersion according to the present disclosure and any one or both of water and the water-soluble organic solvent.

The mixture ratio (mass ratio) in the mixture is preferably the aqueous pigment dispersion according to the present disclosure:a total amount of water and the water-soluble organic solvent used in the mixture = 1:99 to 20:80 and more preferably 5:95 to 10:90.

If necessary, into the aqueous ink composition according to the present disclosure, additives such as a surfactant, an anti-drying agent (swelling agent), a coloration inhibitor, a penetration enhancer, an ultraviolet absorbing agent, a preservative, a rust inhibitor, an anti-foaming agent, a viscosity adjuster, a pH adjusting agent, and a chelating agent may be mixed. The mixing method is not particularly limited, and a mixing method that is generally used is appropriately selected to obtain the aqueous ink composition according to the present disclosure.

In the aqueous ink composition according to the present disclosure, a total content of water and the water-soluble solvent is preferably 10 mass% to 99 mass%, more preferably 30 mass% to 80 mass%, and even more preferably 50 mass% to 70 mass% in view of the preservation stability of the ink and jetting reliability.

In the aqueous ink composition according to the present disclosure, the pigment concentration is preferably 0.5 mass% to 25 mass% and more preferably 1 mass% to 15 mass% in view of the image density.

The volume average particle diameter of the pigment that is dispersed in the aqueous ink composition according

to the present disclosure is preferably 80 nm to 120 nm and more preferably 90 nm to 110 nm. The volume average particle diameter of the pigment in the ink composition is measured by a dynamic light scattering method using a Nanotrac particle size distribution measuring apparatus UPA-EX150 (manufactured by Nikkiso Co., Ltd.).

The surfactant that can be contained in the aqueous ink composition can be used as a surface tension adjuster.

As the surfactant, a compound having a structure having both a hydrophilic part and a hydrophobic part in the molecule can be effectively used, and any one of an anionic surfactant, a cationic surfactant, an amphoteric surfactant, a nonion surfactant, or a betaine-based surfactant can be used.

In the aqueous ink composition according to the present disclosure, in view of the suppression of ink droplet deposition interference, a nonionic surfactant is preferable, and among these, an acetylene glycol derivative (acetylene glycol-based surfactant) is more preferable.

Examples of the acetylene glycol-based surfactant include alkylene oxide adducts of 2,4,7,9-tetramethyl-5-decyne-4,7-diol and 2,4,7,9-tetramethyl-5-decyne-4,7-diol, and at least one kind selected from these is preferable. Examples of commercially available products of these compounds include E series such as OLFINE E1010 manufactured by Nissin Chemical Industry Co., Ltd.

In view of satisfactorily jetting the ink composition by the ink jet method, the surfactant is preferably contained in an amount that causes the surface tension of the ink composition to be adjusted to 20 mN/m to 60 mN/m, more preferably contained in an amount that causes the surface tension of the ink composition to be adjusted to 20 mN/m to 45 mN/m, and even more preferably to be adjusted to 25 mN/m to 40 mN/m.

The surface tension is measured by using an aqueous ink composition in the condition of 25°C with Automatic Surface Tensiometer CBVP-Z (manufactured by Kyowa Interface Science Co., Ltd.).

In a case where the aqueous ink composition according to the present disclosure includes a surfactant, the content of the surfactant is not particularly limited, but the content thereof is preferably 0.1 mass% or more, more preferably 0.1 mass% to 10 mass%, and even more preferably 0.2 mass% to 3 mass% in the aqueous ink composition.

<Characteristics of aqueous ink composition>

[Viscosity]

The viscosity of the aqueous ink composition according to the present disclosure is not particularly limited, but the viscosity at 25°C is preferably 1.2 mPa·s to 15.0 mPa·s, more preferably 2 mPa·s or more and less than 13 mPa·s, and even more preferably 2.5 mPa·s or more and less than 10 mPa·s. The viscosity of the aqueous ink composition is measured at 25°C by using a TV-22 type viscometer (manufactured by Toki Sangyo Co., Ltd.).

[pH]

pH of the aqueous ink composition according to the present disclosure is preferably pH 6 to 11 in view of dispersion stability. In a case of being used in an ink set as described below, it is preferable that the ink composition is aggregated at a high speed by contact with a treatment agent including an acidic compound, and thus pH 7 to 10 is more preferable, and pH 7 to 9 is even more preferable.

[Application]

The aqueous ink composition according to the present disclosure can be used as an ink for stationery such as a felt tip pen or a marker or as an ink for various printers. Among these, in view of excellent pigment dispersibility and dispersion stability, it is preferable to be used for ink jet recording.

EXAMPLES

Hereinafter, the embodiment of the present invention will be described in more detail with reference to examples, but the present disclosure is not limited thereto.

In the following examples, the polymer dispersants P-1 to P-41 are the same as the polymer dispersants P-1 to P-41 described as specific examples of the aforementioned resin particles.

(Synthesis Example 1: Synthesis of polymer dispersant P-1)

605 g of dipropylene glycol was added to a three-neck flask equipped with a stirrer and a cooling pipe and heated to 85°C under a nitrogen atmosphere.

A solution I obtained by mixing 300 g of benzyl methacrylate, 60 g of stearyl methacrylate, 84 g of methacrylic

acid, 156 g of hydroxyethyl methacrylate, and 3.93 g of 2-mercaptopropionic acid and a solution II obtained by dissolving 6.2 g of t-butylperoxy-2-ethylhexanoate (PERBUTYL O manufactured by NOF Corporation) in 115 g of dipropylene glycol were prepared. The solution I was added dropwise over four hours and the solution II was added dropwise over five hours in the three-neck flask.

After completion of the dropwise addition, the mixture was further reacted for two hours, then the temperature was raised to 95°C, and stirring under heating was performed for three hours, such that all unreacted monomers were reacted. The disappearance of the monomer was confirmed by $^1$H-NMR.

The obtained reaction solution was heated to 70°C, 74 g of dimethylaminoethanol as an amine compound was added, then 764 g of propylene glycol was added and stirred to obtain a 30 mass% solution of a polymer dispersant P-1. The constituent components of the obtained polymer were confirmed by $^1$H-NMR. The weight-average molecular weight (Mw) was obtained by GPC.

The acid value and the I/O value of the polymer compound were measured by the above method, and presented in Table 3 or 4.

(Synthesis Examples 2 to 41 and Comparative Synthesis Examples 1 to 8: Synthesis of polymer dispersants P-2 to P-41 and comparative polymer dispersants C-1 to C-8)

In the synthesis of the polymer dispersant P-1, 30 mass% solutions of dispersants P-2 to P-41 or comparative dispersants C-1 to C-8 were obtained in the same manner as in Synthesis Example 1, except that kinds and ratios of monomers to be used were changed as presented in Table 1 or 2, and kinds and amounts of the amine compounds were changed as presented in Table 3 or 4.

The amount of the amine compound was adjusted as the amount (mol%) of the amine compound with respect to a total amount of the acidic group of the polymer dispersant as presented in Table 3.

In the comparative dispersion 5, the amine compound was not added, and 0.56 parts by mass of a 1 mmol/g sodium hydroxide (NaOH) aqueous solution was added.

In Table 2, denotations in sections of the constitutional units a-1 to a-4 represent structures of the respective constitutional units, denotations of the mass% mean contents of the respective constitutional units with respect to the total mass of the polymer dispersant, a numerical values in the section of Mw represent weight-average molecular weights, a denotation of "-" represents that the corresponding constitutional unit was not contained.

[Table 2]

| Comparative polymer dispersant | Constitutional unit a-1 | Mass% | Constitutional unit a-2 | Mass% | Constitutional unit a-3 | Mass% | Constitutional unit a-4 | Mass% | Weight-average molecular weight (Mw) |
|---|---|---|---|---|---|---|---|---|---|
| C-1 | BzMA | 58 | C18MA | 5 | MAA | 14 | HEMA | 23 | 20000 |
| C-2 | BzMA | 20 | C18MA | 45 | MAA | 20 | HEMA | 15 | 20000 |
| C-3 | BzMA | 18 | C18MA | 40 | MAA | 15 | HEMA | 27 | 21000 |
| C-4 | BzMA | 61 | C18MA | 10 | MAA | 15 | HEMA | 14 | 20000 |
| C-5 | BzMA | 45 | CyHMA | 20 | MAA | 14 | HEMA | 21 | 23000 |
| C-6 | BzMA | 32 | OctMA | 30 | MAA | 14 | HEMA | 24 | 23000 |
| C-7 | BzMA | 32 | 2-EHMA | 30 | MAA | 14 | HEMA | 24 | 23000 |
| C-8 | - | - | C18MA | 40 | MAA | 8 | HEMA | 52 | 11000 |

In Table 2, details of the structures denoted by abbreviations that are not presented in Table 1 are as follows. In the following structure, n represents a repeating number. In Table 2, details of the structures denoted by abbreviations that are presented in Table 1 are the same as the details of the structures presented in Table 1.

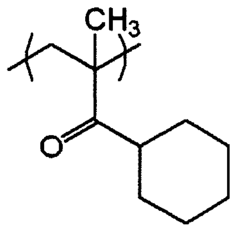

CyHMA

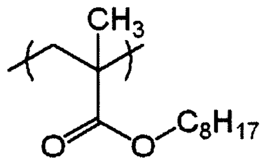

OctMA

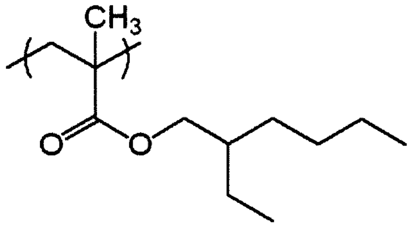

2-EHMA

(Test Example 1: Evaluation of preservation stability of pigment dispersion)

(Examples 1-1 to 1-4, 1-6 to 1-35, 1-37, and 1-39 to 1-43, Reference Examples 1-5, 1-36, and 1-38, and Comparative Examples 1-1 to 1-10)

<Preparation of Dispersion 1>

Pigment dispersions were prepared as described below with a FRITSCH planetary-type ball mill model P-7 (manufactured by FRITSCH GmbH).

2.25 parts by mass of carbon black (CB) pigment powders (CB FW172 manufactured by Orion Engineered Carbons S.A.), 5.06 parts by mass of a 30% by mass solution of the polymer dispersant P-1 obtained in Synthesis Example 1, 0.25 parts by mass of dimethylaminoethanol, and 7.00 parts by mass of ultrapure water were added to a zirconia container. 40 parts by mass of 0.1 mmφ zirconia beads (TORAYCERAM beads manufactured by Toray Industries Inc.) was added and lightly mixed with a spatula.

The zirconia container was placed in a ball mill and dispersed at a rotation speed of 300 rpm for five hours. After completion of the dispersion, the beads were removed by filtering with a filter cloth to obtain Dispersion 1 which was an aqueous pigment dispersion having a pigment concentration of 15% by mass.

<Preparation of Dispersions 2 to 4, 6 to 31, 33, and 35 to 39, Reference Dispersions 5, 32, and 34, and Comparative Dispersions 1 to 10>

Dispersions 2 to 4, 6 to 31, 33, and 35 to 39, Reference Dispersions 5, 32, and 34, and Comparative Dispersions 1 to 10 which were aqueous pigment dispersions were prepared in the same manner as the preparation of Dispersion 1 except that a 30 mass% solution of the dispersants P-2 to P-4, P-6 to P-31, P-33, and P-35 to P-41, Reference dispersants P-5, P-32, and P-34, or the comparative dispersants C-1 to C-8 obtained in Synthesis Examples 2 to 41 or Comparative Synthesis Examples 1 to 8 were used instead of the 30 mass% solution of the polymer dispersant P-1 obtained in Synthesis Example 1, and amine compounds presented in Table 3 or 4 which had amounts equivalent to dimethylaminoethanol were used instead of 0.25 parts by mass of dimethylaminoethanol.

<Evaluation of preservation stability of aqueous pigment dispersion>

Sample bottles were filled with Dispersions 1 to 4, 6 to 31, 33, and 35 to 39, Reference Dispersions 5, 32, and 34, and Comparative Dispersions 1 to 10 which were obtained by the above method and sealed and allowed to stand at 60°C for 48 hours, and aggregation and thickening of the pigment dispersions were evaluated by using change in viscosity as an index.

The viscosity was measured at 25°C by using a TV-22 type viscometer (manufactured by Toki Sangyo Co., Ltd.).

The change of the viscosity was calculated by the following expression. The preservation stability of the aqueous pigment dispersion was evaluated by the following evaluation standards, and the evaluation results were presented in Table 3 or 4.

Change in viscosity = (Viscosity after standing for 48 hours at 60°C) - (Viscosity before standing)

[Evaluation standard]

A: A viscosity change was less than 10 mPa·s.

B: A viscosity change was 10 mPa·s or more and less than 30 mPa·s.

C: A viscosity change was 30 mPa·s or more and less than 50 mPa·s.

D: A viscosity change was 50 mPa·s or more.

[Table 3]

| | Aqueous pigment dispersion | Polymer dispersant | Amine compound | Amount of amine compound with respect to total amount of acidic group of polymer dispersant (mol%) | Acid value (mmol/g) | I/O value | Test Example 1 |
|---|---|---|---|---|---|---|---|
| | | | | | | | Preservation stability of aqueous pigment dispersion |
| Example 1-1 | Dispersion 1 | P-1 | DMAE | 80 | 1.63 | 0.71 | A |
| Example 1-2 | Dispersion 2 | P-2 | DMAE | 80 | 1.63 | 0.69 | A |
| Example 1-3 | Dispersion 3 | P-3 | DMAE | 80 | 1.63 | 0.73 | A |
| Example 1-4 | Dispersion 4 | P-4 | DMAE | 80 | 1.63 | 0.63 | A |
| Reference Example 1-5 | Dispersion 5 | P-5 | DMAE | 80 | 3.48 | 0.66 | A |
| Example 1-6 | Dispersion 6 | P-6 | DMAE | 40 | 1.63 | 0.69 | A |
| Example 1-7 | Dispersion 7 | P-7 | DMAE | 100 | 1.63 | 0.69 | A |
| Example 1-8 | Dispersion 8 | P-8 | DMAE | 25 | 1.63 | 0.69 | A |
| Example 1-9 | Dispersion 9 | P-9 | DMAE | 80 | 2.21 | 0.69 | A |
| Example 1-10 | Dispersion 10 | P-10 | DMAE | 80 | 2.09 | 0.69 | A |
| Example 1-11 | Dispersion 11 | P-11 | DMAE | 80 | 1.39 | 0.69 | A |
| Example 1-12 | Dispersion 12 | P-12 | DMAE | 80 | 1.16 | 0.69 | A |

(continued)

| | Aqueous pigment dispersion | Polymer dispersant | Amine compound | Amount of amine compound with respect to total amount of acidic group of polymer dispersant (mol%) | Acid value (mmol/g) | I/O value | Test Example 1 |
|---|---|---|---|---|---|---|---|
| | | | | | | | Preservation stability of aqueous pigment dispersion |
| Example 1-13 | Dispersion 13 | P-13 | DMAE | 80 | 1.05 | 0.70 | A |
| Example 1-14 | Dispersion 14 | P-14 | DMAE | 80 | 2.67 | 0.69 | A |
| Example 1-15 | Dispersion 15 | P-15 | DMAE | 80 | 1.63 | 0.74 | A |
| Example 1-16 | Dispersion 16 | P-16 | DMAE | 80 | 1.63 | 0.64 | A |
| Example 1-17 | Dispersion 17 | P-17 | DMAE | 80 | 1.63 | 0.65 | A |
| Example 1-18 | Dispersion 18 | P-18 | DMAE | 80 | 1.63 | 0.72 | A |
| Example 1-19 | Dispersion 19 | P-19 | DMAE | 80 | 1.63 | 0.72 | B |
| Example 1-20 | Dispersion 20-1 | P-20 | AMPD | 80 | 1.63 | 0.69 | A |
| Example 1-21 | Dispersion 20-2 | P-20 | AEPD | 80 | 1.63 | 0.69 | A |
| Example 1-22 | Dispersion 20-3 | P-20 | AMP | 80 | 1.63 | 0.69 | A |
| Example 1-23 | Dispersion 20-4 | P-20 | DPA | 80 | 1.63 | 0.69 | B |
| Example 1-24 | Dispersion 20-5 | P-20 | TEA | 80 | 1.63 | 0.69 | B |
| Example 1-25 | Dispersion 21 | P-21 | DMAE | 80 | 1.63 | 0.69 | A |
| Example 1-26 | Dispersion 22 | P-22 | DMAE | 80 | 1.63 | 0.69 | A |
| Example 1-27 | Dispersion 23 | P-23 | DMAE | 80 | 1.63 | 0.69 | A |
| Example 1-28 | Dispersion 24 | P-24 | DMAE | 26 | 1.63 | 0.76 | A |
| Example 1-29 | Dispersion 25 | P-25 | DMAE | 30 | 1.63 | 0.69 | A |
| Example 1-30 | Dispersion 26 | P-26 | DMAE | 40 | 1.63 | 0.70 | A |
| Example 1-31 | Dispersion 27 | P-27 | DMAE | 80 | 1.63 | 0.69 | A |

(continued)

| | Aqueous pigment dispersion | Polymer dispersant | Amine compound | Amount of amine compound with respect to total amount of acidic group of polymer dispersant (mol%) | Acid value (mmol/g) | I/O value | Test Example 1 |
|---|---|---|---|---|---|---|---|
| | | | | | | | Preservation stability of aqueous pigment dispersion |
| Example 1-32 | Dispersion 28 | P-28 | DMAE | 80 | 1.63 | 0.69 | A |
| Example 1-33 | Dispersion 29 | P-29 | DMAE | 80 | 0.46 | 0.63 | B |
| Example 1-34 | Dispersion 30 | P-30 | DMAE | 80 | 0.58 | 0.60 | A |
| Example 1-35 | Dispersion 31 | P-31 | DMAE | 80 | 4.07 | 0.60 | B |
| Reference Example 1-36 | Dispersion 32 | P-32 | DMAE | 80 | 1.39 | 0.48 | B |
| Example 1-37 | Dispersion 33 | P-33 | DMAE | 80 | 1.63 | 0.52 | A |
| Reference Example 1-38 | Dispersion 34 | P-34 | DMAE | 80 | 2.32 | 0.81 | B |
| Example 1-39 | Dispersion 35 | P-35 | DMAE | 80 | 2.67 | 0.80 | A |
| Example 1-40 | Dispersion 36 | P-36 | DMAE | 80 | 1.63 | 0.71 | B |

[Table 4]

| | Aqueous pigment dispersion | Polymer dispersant | Amine compound | Amount of amine compound with respect to total amount of acidic group of polymer dispersant (mol%) | Acid value (mmol/g) | I/O value | Test Example 1 |
|---|---|---|---|---|---|---|---|
| | | | | | | | Preservation stability of aqueous pigment dispersion |
| Example 1-41 | Dispersion 37 | P-37 | DMAE | 20 | 1.63 | 0.72 | B |
| Example 1-42 | Dispersion 38 | P-38 | DMAE | 80 | 0.69 | 0.75 | B |
| Example 1-43 | Dispersion 39 | P-39 | DMAE | 80 | 0.72 | 0.72 | B |
| Comparative Example 1-1 | Comparative Dispersion 1 | C-1 | DMAE | 80 | 1.63 | 0.69 | D |

(continued)

| | Aqueous pigment dispersion | Polymer dispersant | Amine compound | Amount of amine compound with respect to total amount of acidic group of polymer dispersant (mol%) | Acid value (mmol/g) | I/O value | Test Example 1 |
|---|---|---|---|---|---|---|---|
| | | | | | | | Preservation stability of aqueous pigment dispersion |
| Comparative Example 1-2 | Comparative Dispersion 2 | C-2 | DMAE | 80 | 2.32 | 0.60 | C |
| Comparative Example 1-3 | Comparative Dispersion 3 | C-3 | DMAE | 80 | 1.74 | 0.65 | C |
| Comparative Example 1-4 | Comparative Dispersion 4 | C-4 | DMAE | 80 | 1.74 | 0.61 | D |
| Comparative Example 1-5 | Comparative Dispersion 5 | P-40 | (NaOH) | 80 | 1.63 | 0.71 | D |
| Comparative Example 1-6 | Comparative Dispersion 6 | P-41 | - | - | 1 63 | 0.69 | D |
| Comparative Example 1-7 | Comparative Dispersion 7 | C-5 | DMAE | 80 | 1.63 | 0.69 | D |
| Comparative Example 1-8 | Comparative Dispersion 8 | C-6 | DMAE | 80 | 1.63 | 0.69 | D |
| Comparative Example 1-9 | Comparative Dispersion 9 | C-7 | DMAE | 80 | 1.63 | 0.69 | D |
| Comparative Example 1-10 | Comparative Dispersion 10 | C-8 | DMAE | 80 | 0.93 | 0.79 | D |

In Table 3 or 4, denotations of "-" represent that the corresponding components are not contained.

Denotations of the abbreviations in Table 3 or 4 are as follows.

DMAE: Dimethylaminoethanol

AMPD: 2-amino-2-methyl-1,3-propanol (aminomethylpropanediol)

AEPD: 2-amino-2-ethyl-1,3-propanol (aminoethylpropanediol)

AMP: 2-amino-2-methyl-1-propanol

DPA: Dipropylamine

TEA: Triethylamine

(Reference Test Example: Evaluation of water solubility of polymer dispersants)

<Levels 1 to 53: Evaluation of water solubility of polymer dispersant>

Water was added to 2 g of a 30 mass% solution of the polymer dispersant P-1 obtained in the synthesis of the polymer dispersant P-1 or a 30 mass% solution of the dispersants P-2 to P-4, P-6 to P-31, P-33, and P-35 to P-41, Reference dispersants P-5, P-32, and P-34, and the comparative dispersants C-1 to C-8 obtained in the synthesis of

the polymer dispersants P-2 to P-4, P-6 to P-31, P-33, and P-35 to P-41, Reference dispersants P-5, P-32, and P-34, and the comparative polymer dispersants C-1 to C-8 (in a state in which a polymer dispersant was dissolved in an organic solvent), and an amount of water added until the polymer dispersant precipitated was measured, so as to evaluate water solubility.

The precipitation was visually confirmed. The evaluation results are presented in Table 5 or 6.

[Evaluation standard]

A: No precipitation was performed even in a case where 10 g of water was added.
B: An amount of water added until precipitation was 6 g or more and less than 10 g.
C: An amount of water added until precipitation was less than 6 g.

[Table 5] In Table 5, polymer dispersants P-5, P-32, and P-34 are not in accordance with the present invention.

| | Polymer dispersant | Amine compound | Reference Test Example |
|---|---|---|---|
| | | | Water solubility |
| Level 1 | P-1 | DMAE | A |
| Level 2 | P-2 | DMAE | A |
| Level 3 | P-3 | DMAE | A |
| Level 4 | P-4 | DMAE | A |
| Level 5 | P-5 | DMAE | A |
| Level 6 | P-6 | DMAE | A |
| Level 7 | P-7 | DMAE | A |
| Level 8 | P-8 | DMAE | A |
| Level 9 | P-9 | DMAE | A |
| Level 10 | P-10 | DMAE | A |
| Level 11 | P-11 | DMAE | A |
| Level 12 | P-12 | DMAE | A |
| Level 13 | P-13 | DMAE | A |
| Level 14 | P-14 | DMAE | A |
| Level 15 | P-15 | DMAE | A |
| Level 16 | P-16 | DMAE | A |
| Level 17 | P-17 | DMAE | A |
| Level 18 | P-18 | DMAE | A |
| Level 19 | P-19 | DMAE | A |
| Level 20 | P-20 | AMPD | A |
| Level 21 | P-20 | AEPD | A |
| Level 22 | P-20 | AMP | A |
| Level 23 | P-20 | DPA | A |
| Level 24 | P-20 | TEA | A |
| Level 25 | P-21 | DMAE | A |
| Level 26 | P-22 | DMAE | A |
| Level 27 | P-23 | DMAE | A |

(continued)

| | Polymer dispersant | Amine compound | Reference Test Example |
|---|---|---|---|
| | | | Water solubility |
| Level 28 | P-24 | DMAE | A |
| Level 29 | P-25 | DMAE | A |
| Level 30 | P-26 | DMAE | A |
| Level 31 | P-27 | DMAE | A |
| Level 32 | P-28 | DMAE | A |
| Level 33 | P-29 | DMAE | B |
| Level 34 | P-30 | DMAE | A |
| Level 35 | P-31 | DMAE | A |
| Level 36 | P-32 | DMAE | B |
| Level 37 | P-33 | DMAE | A |
| Level 38 | P-34 | DMAE | A |
| Level 39 | P-35 | DMAE | A |
| Level 40 | P-36 | DMAE | B |

[Table 6]

| | Polymer dispersant | Amine compound | Reference Test Example |
|---|---|---|---|
| | | | Water solubility |
| Level 41 | P-37 | DMAE | B |
| Level 42 | P-38 | DMAE | A |
| Level 43 | P-39 | DMAE | A |
| Level 44 | C-1 | DMAE | A |
| Level 45 | C-2 | DMAE | C |
| Level 46 | C-3 | DMAE | A |
| Level 47 | C-4 | DMAE | A |
| Level 48 | P-40 | (NaOH) | A |
| Level 49 | P-41 | - | C |
| Level 50 | C-5 | DMAE | A |
| Level 51 | C-6 | DMAE | A |
| Level 52 | C-7 | DMAE | A |
| Level 53 | C-8 | DMAE | A |

(Test Example 2: Evaluation of preservation stability of black aqueous ink composition)

(Examples 2-1 to 2-4, 2-6 to 2-35, 2-37, and 2-39 to 2-43, Reference Examples 2-5, 2-36, and 2-38, and Comparative Examples 2-1 to 2-10)

<Preparation of Ink 1>

Raw materials were mixed with the following formulation composition, the obtained mixed solution was filtrated

through a glass filter (GS-25) manufactured by ADVANTEC Co., Ltd., and filtrated through a filter (polyvinylidene fluoride (PVDF) film, pore size of 5 μm) manufactured by Millipore Corporation, so as to manufacture Ink 1 which was an aqueous ink composition.

(Composition of Ink 1)

- Dispersion 1 prepared in Test Example 1: 16.5 parts by mass
- Glycerin: 7 parts by mass
- Diethylene glycol: 9 parts by mass
- Propylene glycol: 9 parts by mass
- OLFINE E1010 (surfactant manufactured by Nissin Chemical Industry Co., Ltd.): 1 part by mass
- Ion exchange water: An amount such that the total amount became 100 parts by mass

<Preparation of Ink 2 to 43 and Comparative Ink 1 to 10>

Dispersions 2 to 4, 6 to 31, 33, and 35 to 39, Reference dispersions 5, 32, and 34, and Comparative Dispersions 1 to 10 which were aqueous pigment dispersions were prepared in the same manner as in the preparation of Dispersion 1 except that aqueous pigment dispersions presented in Table 7 or 8 were used as the aqueous pigment dispersion.
In Table 7 or 8, Dispersions 1 to 4, 6 to 31, 33, and 35 to 39, Reference dispersions 5, 32, and 34, and Comparative Dispersions 1 to 10 were Dispersions 1 to 4, 6 to 31, 33, and 35 to 39, Reference dispersions 5, 32, and 34, and Comparative Dispersions 1 to 10 prepared in Test Example 1.

<Evaluation of preservation stability of aqueous ink composition>

Sample bottles were filled with Ink 1 to 43 and Comparative Ink 1 to 10 obtained in the above method and sealed and allowed to stand at 60°C for 48 hours, and aggregation and thickening of the ink were evaluated by using changes in viscosity as an index.
The viscosity was measured at 25°C by using a TV-22 type viscometer (manufactured by Toki Sangyo Co., Ltd.).
The change in the viscosity was calculated by the following expression. The preservation stability of the black ink composition was evaluated by the following evaluation standards, and the evaluation results were presented in Table 7 or 8.

Change in viscosity = (Viscosity after standing for 48 hours at 60°C) - (Viscosity before standing)

[Evaluation standard]

A: A viscosity change was less than 0.3 mPa·s.
B: A viscosity change was 0.3 mPa s or more and less than 2.0 mPa·s.
C: A viscosity change was 2.0 mPa·s or more and less than 3.0 mPa·s.
D: A viscosity change was 3.0 mPa·s or more.

[Table 7]

| | Aqueous pigment dispersion | Aqueous ink composition | Test Example 2 |
|---|---|---|---|
| | | | Preservation stability of black ink composition |
| Example 2-1 | Dispersion 1 | Ink 1 | A |
| Example 2-2 | Dispersion 2 | Ink 2 | A |

(continued)

| | Aqueous pigment dispersion | Aqueous ink composition | Test Example 2 |
|---|---|---|---|
| | | | Preservation stability of black ink composition |
| Example 2-3 | Dispersion 3 | Ink 3 | A |
| Example 2-4 | Dispersion 4 | Ink 4 | A |
| Reference Example 2-5 | Dispersion 5 | Ink 5 | A |
| Example 2-6 | Dispersion 6 | Ink 6 | A |
| Example 2-7 | Dispersion 7 | Ink 7 | A |
| Example 2-8 | Dispersion 8 | Ink 8 | A |
| Example 2-9 | Dispersion 9 | Ink 9 | A |
| Example 2-10 | Dispersion 10 | Ink 10 | A |
| Example 2-11 | Dispersion 11 | Ink 11 | A |
| Example 2-12 | Dispersion 12 | Ink 12 | A |
| Example 2-13 | Dispersion 13 | Ink 13 | A |
| Example 2-14 | Dispersion 14 | Ink 14 | A |
| Example 2-15 | Dispersion 15 | Ink 15 | A |
| Example 2-16 | Dispersion 16 | Ink 16 | A |
| Example 2-17 | Dispersion 17 | Ink 17 | A |
| Example 2-18 | Dispersion 18 | Ink 18 | A |
| Example 2-19 | Dispersion 19 | Ink 19 | B |
| Example 2-20 | Dispersion 20-1 | Ink 20 | A |
| Example 2-21 | Dispersion 20-2 | Ink 21 | A |
| Example 2-22 | Dispersion 20-3 | Ink 22 | A |
| Example 2-23 | Dispersion 20-4 | Ink 23 | B |
| Example 2-24 | Dispersion 20-5 | Ink 24 | B |
| Example 2-25 | Dispersion 21 | Ink 25 | A |
| Example 2-26 | Dispersion 22 | Ink 26 | A |
| Example 2-27 | Dispersion 23 | Ink 27 | A |
| Example 2-28 | Dispersion 24 | Ink 28 | A |
| Example 2-29 | Dispersion 25 | Ink 29 | A |
| Example 2-30 | Dispersion 26 | Ink 30 | A |
| Example 2-31 | Dispersion 27 | Ink 31 | A |
| Example 2-32 | Dispersion 28 | Ink 32 | A |
| Example 2-33 | Dispersion 29 | Ink 33 | B |
| Example 2-34 | Dispersion 30 | Ink 34 | A |
| Example 2-35 | Dispersion 31 | Ink 35 | B |
| Reference Example 2-36 | Dispersion 32 | Ink 36 | B |
| Example 2-37 | Dispersion 33 | Ink 37 | A |

(continued)

| | Aqueous pigment dispersion | Aqueous ink composition | Test Example 2 |
|---|---|---|---|
| | | | Preservation stability of black ink composition |
| Reference Example 2-38 | Dispersion 34 | Ink 38 | B |
| Example 2-39 | Dispersion 35 | Ink 39 | A |
| Example 2-40 | Dispersion 36 | Ink 40 | B |

[Table 8]

| | Aqueous pigment dispersion | Aqueous ink composition | Test Example 2 |
|---|---|---|---|
| | | | Preservation stability of black ink composition |
| Example 2-41 | Dispersion 37 | Ink 41 | B |
| Example 2-42 | Dispersion 38 | Ink 42 | B |
| Example 2-43 | Dispersion 39 | Ink 43 | B |
| Comparative Example 2-1 | Comparative Dispersion 1 | Comparative Ink 1 | D |
| Comparative Example 2-2 | Comparative Dispersion 2 | Comparative Ink 2 | C |
| Comparative Example 2-3 | Comparative Dispersion 3 | Comparative Ink 3 | C |
| Comparative Example 2-4 | Comparative Dispersion 4 | Comparative Ink 4 | D |
| Comparative Example 2-5 | Comparative Dispersion 5 | Comparative Ink 5 | D |
| Comparative Example 2-6 | Comparative Dispersion 6 | Comparative Ink 6 | D |
| Comparative Example 2-7 | Comparative Dispersion 7 | Comparative Ink 7 | D |
| Comparative Example 2-8 | Comparative Dispersion 8 | Comparative Ink 8 | D |
| Comparative Example 2-9 | Comparative Dispersion 9 | Comparative Ink 9 | D |
| Comparative Example 2-10 | Comparative Dispersion 10 | Comparative Ink 10 | D |

(Test Example 3: Evaluation of preservation stability of magenta ink, cyan ink, and yellow ink)

(Examples 3-1 to 3-8)

<Preparation of Magenta Ink 1, Cyan Ink 1, and Yellow Ink 1>

In the preparation of Dispersion 1 in Test Example 1, Magenta Pigment Dispersion 1, Cyan Pigment Dispersion 1, and Yellow Pigment Dispersion 1 were prepared by the same method as in the preparation of Dispersion 1 except that carbon black (CB) pigment powders were respectively changed to PR 122, PB15:3, or PY74.

In the preparation of Ink 1 in Test Example 2, Magenta Ink 1, Cyan Ink 1, and Yellow Ink 1 were prepared by the same method as in the preparation of Ink 1 except that Dispersion 1 was respectively changed to Magenta Pigment Dispersion 1, Cyan Pigment Dispersion 1, and Yellow Pigment Dispersion 1.

<Preparation of Magenta Ink 2, Cyan Ink 2, and Yellow Ink 2>

In the preparation of Dispersion 2 in Test Example 1, Magenta Pigment Dispersion 2, Cyan Pigment Dispersion 2, and Yellow Pigment Dispersion 2 were prepared by the same method as in the preparation of Dispersion 2 except that the carbon black (CB) pigment powders were respectively changed to PR 122, PB15:3, or PY74.

In the preparation of Ink 2 in Test Example 2, Magenta Ink 2, Cyan Ink 2, and Yellow Ink 2 were prepared by the same method as in the preparation of Ink 2 except that Dispersion 2 was respectively changed to Magenta Pigment Dispersion 2, Cyan Pigment Dispersion 2, and Yellow Pigment Dispersion 2.

<Preparation of Magenta Ink 3, Cyan Ink 3, and Yellow Ink 3>

In the preparation of Dispersion 3 in Test Example 1, Magenta Pigment Dispersion 3, Cyan Pigment Dispersion 3, and Yellow Pigment Dispersion 3 were prepared by the same method as in the preparation of Dispersion 3 except that the carbon black (CB) pigment powders were respectively changed to PR 122, PB15:3, or PY74.

In the preparation of Ink 3 in Test Example 2, Magenta Ink 3, Cyan Ink 3, and Yellow Ink 3 were prepared by the same method as in the preparation of Ink 3 except that Dispersion 3 was respectively changed to Magenta Pigment Dispersion 3, Cyan Pigment Dispersion 3, and Yellow Pigment Dispersion 3.

<Preparation of Magenta Ink 4, Cyan Ink 4, and Yellow Ink 4>

In the preparation of Dispersion 4 in Test Example 1, Magenta Pigment Dispersion 4, Cyan Pigment Dispersion 4, and Yellow Pigment Dispersion 4 were prepared by the same method as in the preparation of Dispersion 4 except that the carbon black (CB) pigment powders were respectively changed to PR 122, PB15:3, or PY74.

In the preparation of Ink 4 in Test Example 2, Magenta Ink 4, Cyan Ink 4, and Yellow Ink 4 were prepared by the same method as in the preparation of Ink 4 except that Dispersion 4 was respectively changed to Magenta Pigment Dispersion 4, Cyan Pigment Dispersion 4, and Yellow Pigment Dispersion 4.

<Preparation of Magenta Ink 5, Cyan Ink 5, and Yellow Ink 5>

In the preparation of Dispersion 9 in Test Example 1, Magenta Pigment Dispersion 5, Cyan Pigment Dispersion 5, and Yellow Pigment Dispersion 5 were prepared by the same method as in the preparation of Dispersion 9 except that the carbon black (CB) pigment powders were respectively changed to PR 122, PB15:3, or PY74.

In the preparation of Ink 9 in Test Example 2, Magenta Ink 5, Cyan Ink 5, and Yellow Ink 5 were prepared by the same method as in the preparation of Ink 9 except that Dispersion 9 was respectively changed to Magenta Pigment Dispersion 5, Cyan Pigment Dispersion 5, and Yellow Pigment Dispersion 5.

<Preparation of Magenta Ink 6, Cyan Ink 6, and Yellow Ink 6>

In the preparation of Dispersion 10 in Test Example 1, Magenta Pigment Dispersion 6, Cyan Pigment Dispersion 6, and Yellow Pigment Dispersion 6 were prepared by the same method as in the preparation of Dispersion 10 except that the carbon black (CB) pigment powders were respectively changed to PR 122, PB 15:3, or PY74.

In the preparation of Ink 10 in Test Example 2, Magenta Ink 6, Cyan Ink 6, and Yellow Ink 6 were prepared by the same method as in the preparation of Ink 10 except that Dispersion 10 was respectively changed to Magenta Pigment Dispersion 6, Cyan Pigment Dispersion 6, and Yellow Pigment Dispersion 6.

<Preparation of Magenta Ink 7, Cyan Ink 7, and Yellow Ink 7>

In the preparation of Dispersion 11 in Test Example 1, Magenta Pigment Dispersion 7, Cyan Pigment Dispersion 7, and Yellow Pigment Dispersion 7 were prepared by the same method as in the preparation of Dispersion 11 except that the carbon black (CB) pigment powders were respectively changed to PR 122, PB15:3, or PY74.

In the preparation of Ink 11 in Test Example 2, Magenta Ink 7, Cyan Ink 7, and Yellow Ink 7 were prepared by the same method as in the preparation of Ink 11 except that Dispersion 11 was respectively changed to Magenta Pigment Dispersion 7, Cyan Pigment Dispersion 7, and Yellow Pigment Dispersion 7.

<Preparation of Magenta Ink 8, Cyan Ink 8, and Yellow Ink 8>

In the preparation of Dispersion 16 in Test Example 1, Magenta Pigment Dispersion 8, Cyan Pigment Dispersion 8, and Yellow Pigment Dispersion 8 were prepared by the same method as in the preparation of Dispersion 16 except that the carbon black (CB) pigment powders were respectively changed to PR 122, PB15:3, or PY74.

In the preparation of Ink 16 in Test Example 2, Magenta Ink 8, Cyan Ink 8, and Yellow Ink 8 were prepared by the same method as in the preparation of Ink 16 except that Dispersion 16 was respectively changed to Magenta Pigment Dispersion 8, Cyan Pigment Dispersion 8, and Yellow Pigment Dispersion 8.

<Evaluation of preservation stability>

Preservation stability of Magenta Ink 1 to 8, Cyan Ink 1 to 8, and Yellow Ink 1 to 8 was evaluated by the same method as in the evaluation of the preservation stability of the black ink composition in Test Example 2. The evaluation results were presented in Table 9.

The magenta ink, the cyan ink, and the yellow ink to be used are presented in Table 9.

[Evaluation standard]

A: In the evaluation standard of Test Example 2, with respect to the magenta ink, the cyan ink, and the yellow ink, the evaluation results of all of the ink were A or B.

B: In the evaluation standard of Test Example 2, with respect to the magenta ink, the cyan ink, and the yellow ink, the evaluation results of at least one kind of the ink were C or D.

[Table 9]

| | Included polymer dispersant | Magenta ink | Cyan ink | Yellow ink | Test Example 3 |
|---|---|---|---|---|---|
| | | | | | Preservation stability of magenta ink, cyan ink, and yellow ink |
| Example 3-1 | P-1 | Magenta Ink 1 | Cyan Ink 1 | Yellow Ink 1 | A |
| Example 3-2 | P-2 | Magenta Ink 2 | Cyan Ink 2 | Yellow Ink 2 | A |
| Example 3-3 | P-3 | Magenta Ink 3 | Cyan Ink 3 | Yellow Ink 3 | A |
| Example 3-4 | P-4 | Magenta Ink 4 | Cyan Ink 4 | Yellow Ink 4 | A |
| Example 3-5 | P-9 | Magenta Ink 5 | Cyan Ink 5 | Yellow Ink 5 | A |
| Example 3-6 | P-10 | Magenta Ink 6 | Cyan Ink 6 | Yellow Ink 6 | A |
| Example 3-7 | P-11 | Magenta Ink 7 | Cyan Ink 7 | Yellow Ink 7 | A |
| Example 3-8 | P-16 | Magenta Ink 8 | Cyan Ink 8 | Yellow Ink 8 | A |

From the results of Examples 1-1 to 1-4, 1-6 to 1-35, 1-37, and 1-39 to 1-43, Reference Examples 1-5, 1-36, and 1-38, and Comparative Examples 1-1 to 1-10, it is understood that the aqueous pigment dispersion according to the present disclosure had excellent preservation stability.

From the results of Examples 1-2, 1-9 to 1-14, 1-33 to 1-35, and Reference Example 1-5, it is understood that, in a case where an acid value of the polymer dispersant was more than 0.46 and less than 4.07, the preservation stability of the aqueous pigment dispersion was more excellent.

From the results of Examples 1-2, 1-6 to 1-8, and 1-41, it is understood that, in a case where an amount of the amine compound with respect to the total amount of the acidic group of the polymer dispersant was more than 20 mol%, the preservation stability of the aqueous pigment dispersion was more excellent.

From the results of Examples 1-2, 1-15 to 1-17, 1-37, and 1-39, and Reference Examples 1-36 and 1-38, it is understood that, in a case where an I/O value of the polymer dispersant was more than 0.48 and less than 0.81, the preservation stability of the aqueous pigment dispersion was more excellent.

From the results of Examples 1-3, 1-18 to 1-19, and 1-40, it is understood that, in a case where a weight-average molecular weight of the polymer dispersant was more than 4,500 and less than 55,000, the preservation stability

of the aqueous pigment dispersion was more excellent.

From the results of Examples 1-2, and 1-20 to 1-24, it is understood that, in a case where the amine compound was dimethylaminoethanol, aminomethylpropanediol, or aminoethylpropanediol, the preservation stability of the aqueous pigment dispersion was more excellent.

From the results of Examples 1-2, and 1-25 to 1-27, it is understood that, even in a case where the constitutional unit a-4 was changed, the aqueous pigment dispersion having the excellent preservation stability was able to be obtained.

From the results of Examples 1-2, and 1-28 to 1-30, it is understood that, even in a case where the constitutional unit a-1 was changed, the aqueous pigment dispersion having the excellent preservation stability was able to be obtained.

From the results of Examples 1-2, 1-31, and 1-32, it is understood that, even in a case where the constitutional unit a-2 was changed, the aqueous pigment dispersion having the excellent preservation stability was able to be obtained.

From the results of Examples 1-2, 1-42, and 1-43, it is understood that, in a case where an acidic group included in the constitutional unit a-3 was a carboxy group, the preservation stability of the aqueous pigment dispersion was more excellent.

From Levels 1 to 53, it is understood that, the polymer dispersant used in the aqueous pigment dispersion according to the present disclosure had excellent water solubility in presence of the amine compound.

Particularly, from the results of Levels 33, 36, 40, and 41, and other levels, in a case where an acid value of the polymer dispersant was more than 0.46, in a case where an I/O value was more than 0.48, in a case where a weight-average molecular weight was more than 55,000, or in a case where an amount of the amine compound with respect to a total amount of the acidic group of the polymer dispersant was more than 20 mol%, the water solubility of the polymer dispersant was more excellent.

From the results of Examples 2-1 to 2-4, 2-6 to 2-35, 2-37, and 2-39 to 2-43, Reference Examples 2-5, 2-36, and 2-38, and Comparative Examples 2-1 to 2-10, it is understood that the aqueous ink composition according to the present disclosure had excellent preservation stability.

From the results of Examples 2-2, 2-9 to 2-14, 2-33 to 2-35, and Reference Example 2-5, it is understood that, in a case where an acid value of the polymer dispersant was more than 0.46 and less than 4.07, the preservation stability of the aqueous ink composition in which the aqueous pigment dispersion was used was more excellent.

From the results of Examples 2-2, 2-6 to 2-8, and 2-41, it is understood that, in a case where an amount of the amine compound with respect to a total amount of the acidic group of the polymer dispersant was more than 20 mol%, the preservation stability of the aqueous ink composition in which the aqueous pigment dispersion was used was more excellent.

From the results of Examples 2-2, 2-15 to 2-17, 2-37, and 2-39, and Reference Examples 2-36 and 2-38, it is understood that, in a case where an I/O value of the polymer dispersant was more than 0.48 and less than 0.81, the preservation stability of the aqueous ink composition in which the aqueous pigment dispersion was used was more excellent.

From the results of Examples 2-3, 2-18, 2-19, and 2-40, it is understood that, in a case where a weight-average molecular weight of the polymer dispersant was more than 4,500 and less than 55,000, the preservation stability of the aqueous ink composition in which the aqueous pigment dispersion was used was more excellent.

From the results of Examples 2-2, and 2-20 to 2-24, it is understood that, in a case where the amine compound was dimethylaminoethanol, aminomethylpropanediol, or aminoethylpropanediol, the preservation stability of the aqueous ink composition in which the aqueous pigment dispersion was used was more excellent.

From the results of Examples 2-2, and 2-25 to 2-27, it is understood that, even in a case where the constitutional unit a-4 was changed, the aqueous ink composition in which the aqueous pigment dispersion having excellent preservation stability was used was able to be obtained.

From the results of Examples 2-2, and 2-28 to 2-30, it is understood that, even in a case where the constitutional unit a-1 was changed, the aqueous ink composition in which the aqueous pigment dispersion having excellent preservation stability was used was able to be obtained.

From the results of Examples 2-2, 2-31, and 2-32, it is understood that, even in a case where the constitutional unit a-2 was changed, the aqueous ink composition in which the aqueous pigment dispersion having excellent preservation stability was used was able to be obtained.

From the results of Examples 2-2, 2-42, and 2-43, it is understood that, the acidic group included in the constitutional unit a-3 was a carboxy group, the preservation stability of the aqueous ink composition in which the aqueous pigment dispersion was used was more excellent.

From the results of Examples 3-1 to 3-8, it is understood that, even in a case where the aqueous pigment dispersion according to the present embodiment includes a magenta pigment, a cyan pigment, or a cyan pigment, the preservation stability was excellent.

**Claims**

1. An aqueous pigment dispersion comprising:

water;
a water-soluble organic solvent;
a pigment;
a polymer dispersant including 20 mass% to 60 mass% of a constitutional unit a-1 represented by Formula 1 with respect to the total mass of the polymer dispersant, 10 mass% to 40 mass% of a constitutional unit a-2 represented by Formula 2 with respect to the total mass of the polymer dispersant, a constitutional unit a-3 having an acidic group, and a constitutional unit a-4 having a structure selected from the following HEMA, DAAAm, or PME:

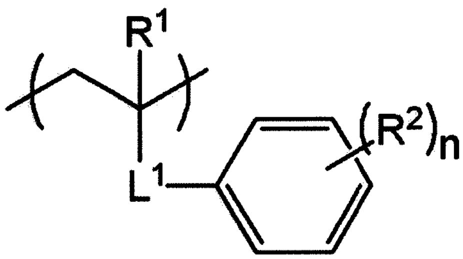

Formula 1

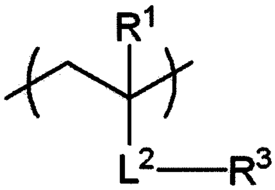

Formula 2

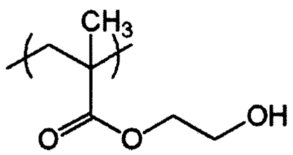

HEMA

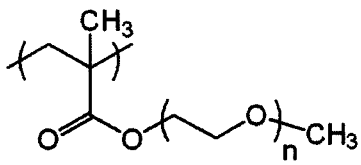

n=9

PME

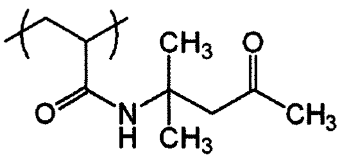

DAAAm

in Formula 1 or 2, $R^1$ represents a hydrogen atom or a methyl group, $L^1$ represents a single bond or a divalent linking group obtained by combining two or more kinds of groups selected from an alkylene group having 1 to 12 carbon atoms, an alkenylene group having 2 to 12 carbon atoms, -C(=O)-, -O-, -S-, and $-NR^7-$, $R^2$'s each independently represent an alkyl group having 1 to 6 carbon atoms, an alkoxy group having 1 to 15 carbon atoms, an amino group, a halogen atom, an aryloxy group having 6 to 20 carbon atoms, or a silyl group, $R^7$ represents a hydrogen atom or an alkyl group having 1 to 6 carbon atoms, n represents an integer of 0 to 5, $L^2$ represents -C(=O)O-, -OC(=O)-, or $-C(=O)NR^7-$, and $R^3$ represents an alkyl group having 12 or more carbon atoms; and
an amine compound represented by Formula 3,

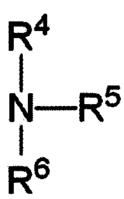

Formula 3

in Formula 3, $R^4$ to $R^6$ each independently represent a hydrogen atom or a substituent,

wherein an I/O value of the polymer dispersant is 0.50 to 0.80.

2. The aqueous pigment dispersion according to claim 1, wherein an acid value of the polymer dispersant is 0.5 mmol/g to 3.5 mmol/g.

3. The aqueous pigment dispersion according to claim 1 or 2, wherein an I/O value of the polymer dispersant is 0.50 to 0.75.

4. The aqueous pigment dispersion according to any one of claims 1 to 3, wherein a weight-average molecular weight of the polymer dispersant is 5,000 to 50,000.

5. The aqueous pigment dispersion according to any one of claims 1 to 4, wherein a content ratio of the constitutional unit a-2 represented by Formula 2 is 10 mass% to 30 mass% with respect to the total mass of the polymer dispersant.

6. The aqueous pigment dispersion according to any one of claims 1 to 5, wherein the amine compound represented by Formula 3 is dimethylaminoethanol, aminomethylpropanediol, or aminoethylpropanediol.

7. The aqueous pigment dispersion according to any one of claims 1 to 6, wherein the acidic group is a carboxy group.

8. The aqueous pigment dispersion according to any one of claims 1 to 7, wherein the pigment includes at least one selected from the group consisting of a magenta pigment, a cyan pigment, a yellow pigment, and carbon black.

9. An aqueous ink composition using the aqueous pigment dispersion according to any one of claims 1 to 8.

10. Use of the aqueous ink composition according to claim 9 for ink jet recording.

**Patentansprüche**

1. Wässrige Pigmentdispersion umfassend:

Wasser;
ein wasserlösliches organisches Lösungsmittel;
ein Pigment;
ein polymeres Dispergiermittel enthaltend 20 Masse% bis 60 Masse% einer durch die Formel 1 dargestellten Struktureinheit a-1, bezogen auf die Gesamtmasse des polymeren Dispergiermittels, 10 Masse% bis 40 Masse% einer durch die Formel 2 dargestellten Struktureinheit a-2, bezogen auf die Gesamtmasse des polymeren Dispergiermittels, eine Struktureinheit a-3, die eine saure Gruppe aufweist und eine Struktureinheit a-4, mit einer Struktur, ausgewählt aus den Folgenden HEMA, DAAAm, oder PME:

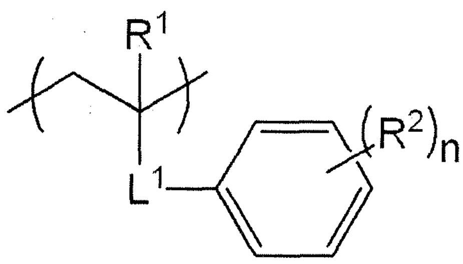

Formel 1

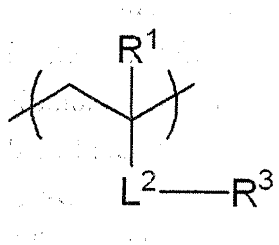

Formel 2

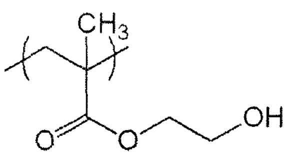

HEMA

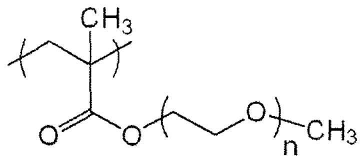

n=9

PME

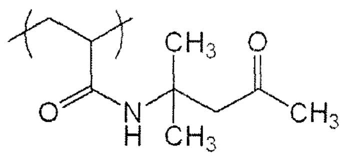

DAAAm

in Formel 1 oder 2, stellt $R^1$ ein Wasserstoffatom oder eine Methylgruppe dar, $L^1$ stellt eine Einfachbindung oder eine divalente Verbindungsgruppe dar, die durch Kombinieren von zwei oder mehr Gruppen, ausgewählt aus einer Alkylengruppe mit 1 bis 12 Kohlenstoffatomen, einer Alkenylengruppe mit 2 bis 12 Kohlenstoffatomen, - C(=O)-, -O-, -S- und -$NR^7$- erhalten wird, $R^2$ stellen jeweils unabhängig eine Alkylgruppe mit 1 bis 6 Kohlenstoffatomen, eine Alkoxygruppe mit 1 bis 15 Kohlenstoffatomen, eine Aminogruppe, ein Halogenatom, eine Aryloxygruppe mit 6 bis 20 Kohlenstoffatomen oder eine Silylgruppe dar, $R^7$ stellt ein Wasserstoffatom oder eine Alkylgruppe mit 1 bis 6 Kohlenstoffatomen dar, n stellt eine ganze Zahl von 0 bis 5 dar, $L^2$ stellt -C(=O)O-, -OC(=O)- oder -C(=O)$NR^7$- dar und $R^3$ stellt eine Alkylgruppe mit 12 oder mehr Kohlenstoffatomen dar; und eine durch Formel 3 dargestellte Aminverbindung,

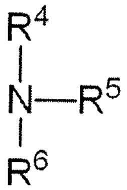

Formel 3

in Formel 3, stellen $R^4$ bis $R^6$ jeweils unabhängig ein Wasserstoffatom oder einen Substituent dar,

wobei ein I/O Wert des polymeren Dispergiermittels 0,50 bis 0,80 beträgt.

**2.** Wässrige Pigmentdispersion nach Anspruch 1,
wobei ein Säurewert des polymeren Dispergiermittels 0,5 mmol/g bis 3,5 mmol/g beträgt.

**3.** Wässrige Pigmentdispersion nach Anspruch 1 oder 2,
wobei ein I/O Wert des polymeren Dispergiermittels 0,50 bis 0,75 beträgt.

**4.** Wässrige Pigmentdispersion nach einem der Ansprüche 1 bis 3,
wobei ein gewichtsgemitteltes Molekulargewicht des polymeren Dispergiermittels 5000 bis 50,000 beträgt.

**5.** Wässrige Pigmentdispersion nach einem der Ansprüche 1 bis 4,
wobei ein Mengenverhältnis der durch Formel a-2 dargestellten Struktureinheit 10 Masse% bis 30 Masse%, bezogen auf die Gesamtmasse des polymeren Dispergiermittels beträgt.

**6.** Wässrige Pigmentdispersion nach einem der Ansprüche 1 bis 5,
wobei die durch Formel 3 dargestellte Aminverbinung Dimethylaminoethanol, Aminomethylpropandiol oder Aminoethylpropandiol ist.

7. Wässrige Pigmentdispersion nach einem der Ansprüche 1 bis 6, wobei die saure Gruppe eine Carboxylgruppe ist.

8. Wässrige Pigmentdispersion nach einem der Ansprüche 1 bis 7, wobei das Pigment mindestens eines, ausgewählt aus der Gruppe von einem Magentapigment, einem Cyanpigment, einem Gelbpigment und einem Ruß enthält.

9. Wässrige Tintenzusammensetzung, die die wässrige Pigmentdispersion nach einem der Ansprüche 1 bis 8 verwendet.

10. Verwendung der wässrigen Tintenzusammensetzung nach Anspruch 9 zum Tintenstrahlaufzeichnen.

**Revendications**

1. Dispersion de pigment aqueuse, comprenant :

de l'eau ;
un solvant organique soluble dans l'eau ;
un pigment ;
un dispersant polymère incluant de 20 % en masse à 60 % en masse d'une unité constitutive a-1 représentée par la Formule 1 par rapport à la masse totale du dispersant polymère, de 10 % en masse à 40 % en masse d'une unité constitutive a-2 représentée par la Formule 2 par rapport à la masse totale du dispersant polymère, une unité constitutive a-3 présentant un groupe acide, et une unité constitutive a-4 présentant une structure sélectionnée parmi les éléments suivants : HEMA, DAAAm, ou PME :

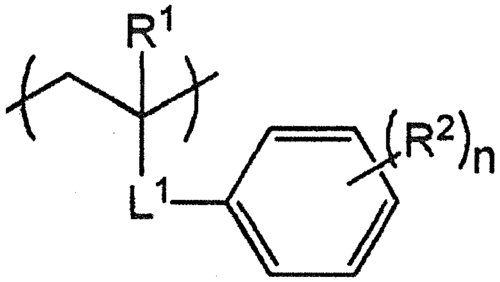

Formula 1

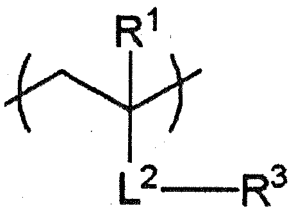

Formula 2

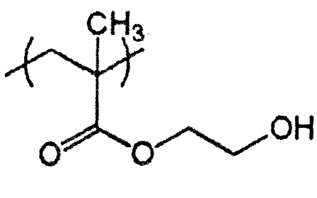

HEMA

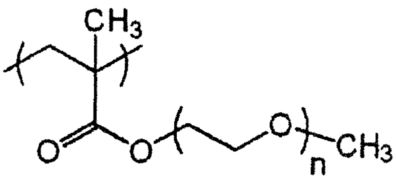

n=9

PME

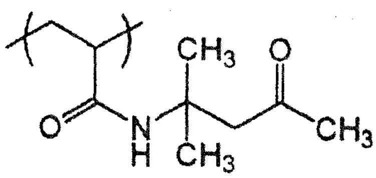

DAAAm

dans les Formules 1 ou 2, $R^1$ représente un atome d'hydrogène ou un groupe méthyle : $L^1$ représente une

liaison simple ou un groupe de liaison divalent obtenu en combinant deux types de groupes, ou davantage, sélectionnés parmi un groupe alkylène présentant de 1 à 12 atomes de carbone, un groupe alcénylène présentant de 2 à 12 atomes de carbone, -C(=O)-, -O-, -S-, et $-NR^7-$ ; les $R^2$ représentent chacun indépendamment un groupe alkyle présentant de 1 à 6 atomes de carbone, un groupe alkoxy présentant de 1 à 15 atomes de carbone, un groupe amino, un atome d'halogène, un groupe aryloxy présentant de 6 à 20 atomes de carbone, ou un groupe silyle ; $R^7$ représente un atome d'hydrogène ou un groupe alkyle présentant de 1 à 6 atomes de carbone ; n représente un entier de 0 à 5 ; $L^2$ représente - C(=O)O-, -OC(=O)-, ou $-C(=O)NR^7-$, et $R^3$ représente un groupe alkyle présentant 12 atomes de carbone ou davantage , et
un composé amine représenté par la Formule 3 ;

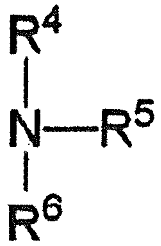

Formula 3

dans la Formule 3, $R^4$ à $R^6$ représentent chacun indépendamment un atome d'hydrogène ou un substituant,
dans laquelle une valeur I/O du dispersant polymère s'étend de 0,50 à 0,80.

2. Dispersion de pigment aqueuse selon la revendication 1,
dans laquelle un indice d'acidité du dispersant polymère s'étend de 0,5 mmol/g à 3,5 mmol/g.

3. Dispersion de pigment aqueuse selon la revendication 1 ou 2,
dans laquelle une valeur I/O du dispersant polymère s'étend de 0,50 à 0,75.

4. Dispersion de pigment aqueuse selon l'une quelconque des revendications 1 à 3,
dans laquelle un poids moléculaire en poids moyen du dispersant polymère s'étend de 5000 à 50 000.

5. Dispersion de pigment aqueuse selon l'une quelconque des revendications 1 à 4,
dans laquelle un rapport de teneur de l'unité constitutive a-2 représentée par la Formule 2 s'étend de 10 % en masse à 30 % en masse par rapport à la masse totale du dispersant polymère.

6. Dispersion de pigment aqueuse selon l'une quelconque des revendications 1 à 5,
dans laquelle le composé amine représenté par la Formule 3 est du diméthylaminoéthanol, de l'aminométhylpropanediol, ou de l'aminoéthylpropanediol.

7. Dispersion de pigment aqueuse selon l'une quelconque des revendications 1 à 6,
dans laquelle le groupe acide est un groupe carboxy.

8. Dispersion de pigment aqueuse selon l'une quelconque des revendications 1 à 7,
dans laquelle le pigment inclut au moins un groupe sélectionné parmi le groupe consistant en un pigment magenta, un pigment cyan, un pigment jaune, et du noir de carbone.

9. Composition d'encre aqueuse utilisant la dispersion de pigment aqueuse selon l'une quelconque des revendications 1 à 8.

10. Utilisation de la composition d'encre aqueuse selon la revendication 9 pour un enregistrement par jet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016069487 A
- JP 2015093897 A
- JP 2015157891 A
- JP 8253719 A
- JP H08253719 A
- JP 10046090 A
- JP H10046090 A
- US 2006017759 A1
- US 2016222234 A1
- JP 2001329199 A
- JP 2007100071 A
- JP 2009190379 A


### Non-patent literature cited in the description


- **KODA, YOSHIO.** *Organic Conceptual Diagram - Basic and Application,* 1984, 13